# EUROPEAN PATENT APPLICATION

(11) **EP 4 815 242 A1**
(43) Date of publication of application: **30.09.2026**
(21) Application number: 24896412.4
(22) Date of filing: 21.11.2024
(51) Int. Cl.: H02J 3/32

(54) **VIRTUAL SYNCHRONOUS CONTROL METHOD AND APPARATUS FOR ENERGY STORAGE SYSTEM, DEVICE, AND STORAGE MEDIUM**

(30) Priority: 28.11.2023 CN 202311608762
(71) Applicant: Contemporary Amperex Future Energy Research Institute (Shanghai) Limited, Shanghai 200241 (CN); Contemporary Amperex Technology Co., Limited, Ningde, Fujian 352100 (CN)
(72) Inventor: LIANG, Liliuyuan, Shanghai 200241 (CN); WANG, Sheng, Shanghai 200241 (CN); WEI, Chao, Shanghai 200241 (CN); PENG, Hao, Shanghai 200241 (CN); TU, Qing, Shanghai 200241 (CN); YUAN, Xiaotian, Shanghai 200241 (CN); YU, Dongxu, Shanghai 200241 (CN); LIN, Hongfei, Shanghai 200241 (CN); ZONG, Yanyun, Shanghai 200241 (CN)
(74) Representative: Gong, Jinping
(86) International application number: PCT/CN2024/133633
(87) International publication number: WO 2025/113321

(57) **Abstract**

This application relates to a virtual synchronous control method and apparatus, a device, and a storage medium for an energy storage system. The method includes: controlling an output voltage of a direct-current energy storage valve based on a measured value of an output electrical signal on a direct-current side of a voltage source converter and a reference value of the output voltage of the direct-current energy storage valve; and further controlling an output signal on an alternating-current side of the voltage source converter based on a measured value of a grid connection point electrical signal and a reference value of the grid connection point electrical signal of the voltage source converter. It can be seen that, embodiments of this application realize a virtual synchronous control method for independently controlling the voltage source converter and the direct-current energy storage valve in the energy storage system, and the method is applicable to virtual synchronous control of high-voltage direct-current directly-connected energy storage systems. Additionally, by independently controlling the voltage source converter and the direct-current energy storage valve in the energy storage system, the voltage source converter does not need to handle both direct-current side control and alternating-current side control, thereby reducing the complexity of a control loop of the voltage source converter.

## Description

### CROSS-REFERENCE TO RELATED APPLICATIONS

This application claims priority to Chinese Patent Application No. 2023116087625, filed on November 28, 2023 and entitled "VIRTUAL SYNCHRONOUS CONTROL METHOD AND APPARATUS, DEVICE, AND STORAGE MEDIUM FOR ENERGY STORAGE SYSTEM", which is incorporated herein by reference in its entirety.

### TECHNICAL FIELD

This application relates to the field of energy storage technologies, in particular to a virtual synchronous control method and apparatus, a device, and a storage medium for an energy storage system.

### BACKGROUND

With the rapid development of a new power system dominated by new energy, energy storage systems with high voltage, large capacity, and grid-friendly integration are becoming a new development demand and trend. High-voltage direct-current directly-connected energy storage systems have emerged as an important development direction.

In the related art, a high-voltage direct-current directly-connected energy storage system is integrated with a voltage source converter (voltage source converter, VSC) and a direct-current energy storage valve, offering advantages such as a high degree of modularization. However, compared to traditional energy storage systems, high-voltage direct-current directly-connected energy storage systems differ in topology and functionality. Therefore, how to perform virtual synchronous control for high-voltage direct-current directly-connected energy storage systems is an urgent issue to be addressed.

### SUMMARY

In view of the above problem, this application provides a virtual synchronous control method and apparatus, a device, and a storage medium for an energy storage system, which can address the issue of virtual synchronous control for high-voltage direct-current directly-connected energy storage systems in the related art.

According to a first aspect, this application provides a virtual synchronous control method for an energy storage system, where the energy storage system includes a voltage source converter and a direct-current energy storage valve, and the method includes:
controlling an output voltage of the direct-current energy storage valve based on a measured value of an output electrical signal on a direct-current side of the voltage source converter and a reference value of the output voltage of the direct-current energy storage valve; and
controlling an output signal on an alternating-current side of the voltage source converter based on a measured value of a grid connection point electrical signal and a reference value of the grid connection point electrical signal of the voltage source converter.

In the technical solution of this embodiment of this application, the output voltage of the direct-current energy storage valve can be independently controlled based on the measured value of the output electrical signal on the direct-current side of the voltage source converter and the reference value of the output voltage of the direct-current energy storage valve, and the output signal on the alternating-current side of the voltage source converter can be independently controlled based on the measured value of the grid connection point electrical signal and the reference value of the grid connection point electrical signal of the voltage source converter. It can be seen that, this embodiment of this application realizes a virtual synchronous control method for independently controlling the voltage source converter and the direct-current energy storage valve in the energy storage system, and the method is applicable to virtual synchronous control of high-voltage direct-current directly-connected energy storage systems, facilitating grid-forming control of high-voltage direct-current directly-connected energy storage systems, thereby improving the low-voltage fault ride-through capability of the energy storage system. Additionally, by independently controlling the voltage source converter and the direct-current energy storage valve in the energy storage system, the voltage source converter does not need to handle both direct-current side control and alternating-current side control, thereby reducing the complexity of a control loop of the voltage source converter.

In some embodiments, the measured value of the grid connection point electrical signal includes: a measured value of active power at a grid connection point, a measured value of reactive power at the grid connection point, and a measured value of voltage at the grid connection point; and the reference value of the grid connection point electrical signal includes: a reference value of active power at the grid connection point, a reference value of reactive power at the grid connection point, and a reference value of voltage at the grid connection point; and the controlling an output signal on an alternating-current side of the voltage source converter based on a measured value of a grid connection point electrical signal and a reference value of the grid connection point electrical signal of the voltage source converter includes:
controlling an output frequency on the alternating-current side of the voltage source converter based on the measured value of active power at the grid connection point and the reference value of active power at the grid connection point; and
controlling an output voltage amplitude on the alternating-current side of the voltage source converter based on the measured value of reactive power at the grid connection point, the measured value of voltage at the grid connection point, the reference value of reactive power at the grid connection point, and the reference value of voltage at the grid connection point.

In the technical solution of these embodiments of this application, active power-frequency control of the voltage source converter is achieved based on the measured value of active power at the grid connection point and the reference value of active power at the grid connection point, and reactive power-voltage control of the voltage source converter is achieved based on the measured value of reactive power at the grid connection point, the measured value of voltage at the grid connection point, the reference value of reactive power at the grid connection point, and the reference value of voltage at the grid connection point. This achieves virtual synchronous control of active power and reactive power decoupling for the voltage source converter, and facilitating transient support for frequency at the grid connection point and voltage at the grid connection point, thereby further improving the low-voltage fault ride-through capability of the energy storage system.

In some embodiments, the controlling an output frequency on the alternating-current side of the voltage source converter based on the measured value of active power at the grid connection point and the reference value of active power at the grid connection point includes:
determining an active power deviation at the grid connection point based on the measured value of active power at the grid connection point and the reference value of active power at the grid connection point;
performing a first closed-loop control process on the active power deviation at the grid connection point to obtain a closed-loop result; and
controlling the output frequency based on the closed-loop result and a rated angular frequency of a grid.

In the technical solution of these embodiments of this application, active power at the grid connection point can be adjusted to the reference value of active power at the grid connection point by converting the active power deviation at the grid connection point into the output frequency on the alternating-current side of the voltage source converter.

In some embodiments, the determining an active power deviation at the grid connection point based on the measured value of active power at the grid connection point and the reference value of active power at the grid connection point includes:
performing an amplitude limiting process on the reference value of active power at the grid connection point based on a maximum active power amplitude limit and a minimum active power amplitude limit to obtain an amplitude-limited reference value of active power at the grid connection point; and
subtracting the measured value of active power at the grid connection point from the amplitude-limited reference value of active power at the grid connection point to obtain the active power deviation at the grid connection point.

In the technical solution of these embodiments of this application, by performing an amplitude limiting process on the reference value of active power at the grid connection point, the amplitude-limited reference value of active power at the grid connection point can conform to the actual capability of the energy storage system, so that a more accurate active power deviation at the grid connection point can be obtained based on the amplitude-limited reference value of active power at the grid connection point and the measured value of active power at the grid connection point, thereby facilitating more accurate control of the output frequency on the alternating-current side of the voltage source converter based on the active power deviation at the grid connection point.

In some embodiments, the performing a first closed-loop control process on the active power deviation at the grid connection point to obtain a closed-loop result includes:
determining a first feedback signal based on a historical closed-loop result and a damping coefficient; and
performing a first integration process on a difference signal between the active power deviation at the grid connection point and the first feedback signal to obtain the closed-loop result.

In some embodiments, the performing a first integration process on a difference signal between the active power deviation at the grid connection point and the first feedback signal to obtain the closed-loop result includes:
performing the first integration process on the difference signal based on an inertia time constant and a latch coefficient to obtain the closed-loop result.

In some embodiments, the method further includes:
adjusting the maximum active power amplitude limit and the minimum active power amplitude limit based on a grid connection point fault detection signal, so that the reference value of active power of the energy storage system during a fault does not exceed the actual capability of the system, thereby improving the transient stability of the energy storage system during the fault.

In some embodiments, the adjusting the maximum active power amplitude limit and the minimum active power amplitude limit based on a grid connection point fault detection signal includes:
upon detecting that the grid connection point fault detection signal is used for indicating that there is a fault in the energy storage system, adjusting the maximum active power amplitude limit to a target maximum power amplitude limit and adjusting the minimum active power amplitude limit to a target minimum power amplitude limit; or
upon detecting that the grid connection point fault detection signal is used for indicating that the fault is cleared within a first preset duration, adjusting the maximum active power amplitude limit from the target maximum power amplitude limit to a preset maximum power amplitude limit and adjusting the minimum active power amplitude limit from the target minimum power amplitude limit to a preset minimum power amplitude limit.

In some embodiments, the target maximum power amplitude limit and the target minimum power amplitude limit are both related to the measured value of reactive power at the grid connection point, the measured value of voltage at the grid connection point, and a drop amplitude of the measured value of voltage at the grid connection point during the fault.

In the technical solution of these embodiments of this application, the target maximum power amplitude limit and the target minimum power amplitude limit are adjusted based on the measured value of reactive power at the grid connection point, the measured value of voltage at the grid connection point, and the drop amplitude of the measured value of voltage at the grid connection point during the fault, ensuring that the reference value of active power of the energy storage system during the fault does not exceed the actual capability of the system, thereby mitigating the issue of periodic changes in voltage at the grid connection point and significant fluctuation in active power due to continuous increase in power angle when the active power input is constantly greater than zero, thereby improving the transient stability of the energy storage system during the fault.

In some embodiments, the method further includes:
adjusting the damping coefficient and the latch coefficient based on the grid connection point fault detection signal, so that the reference value of active power of the energy storage system during the fault does not exceed the actual capability of the system, thereby improving the transient stability of the energy storage system during the fault.

In some embodiments, the adjusting the damping coefficient and the latch coefficient based on the grid connection point fault detection signal includes:
upon detecting that the grid connection point fault detection signal is used for indicating that there is a fault in the energy storage system, adjusting the damping coefficient to a target damping coefficient and adjusting the latch coefficient to a target latch coefficient; or
upon detecting that the grid connection point fault detection signal is used for indicating that the fault is cleared within a second preset duration, adjusting the damping coefficient from the target damping coefficient to a preset damping coefficient and adjusting the latch coefficient from the target latch coefficient to a preset latch coefficient.

In the technical solution of these embodiments of this application, by adaptively adjusting the damping coefficient and adaptively adjusting the latch coefficient to adjust the integration procedure of active frequency, power angle movement during the fault can be further reduced, minimizing an absolute value of the active power deviation. This mitigates significant power angle fluctuation and continuous periodic fluctuation in voltage at the grid connection point after fault recovery, thereby improving the transient stability of the energy storage system during the fault recovery process.

In some embodiments, the target latch coefficient is zero, and the target damping coefficient is related to an offset of active power at the grid connection point during the fault and an allowable frequency offset during the fault.

In some embodiments, the method further includes:
determining the grid connection point fault detection signal based on the measured value of voltage at the grid connection point, a preset fault detection threshold, and a preset fault clearance threshold.

In the technical solution of these embodiments of this application, the grid connection point fault detection signal is determined based on the measured value of voltage at the grid connection point, the preset fault detection threshold, and the preset fault clearance threshold, so that the active power amplitude limit, the damping coefficient, and the latch coefficient can be adjusted based on the grid connection point fault detection signal, ensuring that the reference value of active power of the energy storage system during the fault does not exceed the actual capability of the system, thereby improving the transient stability of the energy storage system during the fault.

In some embodiments, the determining the grid connection point fault detection signal based on the measured value of voltage at the grid connection point, a preset fault detection threshold, and a preset fault clearance threshold includes:
upon detecting that a change value of the measured value of voltage at the grid connection point is less than 0 and the measured value of voltage at the grid connection point is less than or equal to the preset fault detection threshold within a third preset duration, determining that the grid connection point fault detection signal is used for indicating that there is a fault in the energy storage system and recording a drop amplitude of the measured value of voltage at the grid connection point during the fault; and
upon detecting that a change value of the measured value of voltage at the grid connection point is greater than 0 and the measured value of voltage at the grid connection point is greater than or equal to the preset fault clearance threshold, determining that the grid connection point fault detection signal is used for indicating that the fault of the energy storage system is cleared within a fourth preset duration, and adjusting the drop amplitude of the measured value of voltage at the grid connection point during the fault to a preset drop amplitude.

In some embodiments, the controlling an output voltage amplitude on the alternating-current side of the voltage source converter based on the measured value of reactive power at the grid connection point, the measured value of voltage at the grid connection point, the reference value of reactive power at the grid connection point, and the reference value of voltage at the grid connection point includes:
determining a first internal potential amplitude of the voltage source converter based on the measured value of reactive power at the grid connection point, the measured value of voltage at the grid connection point, the reference value of reactive power at the grid connection point, and the reference value of voltage at the grid connection point; and
controlling the output voltage amplitude on the alternating-current side of the voltage source converter based on the first internal potential amplitude of the voltage source converter.

In the technical solution of these embodiments of this application, by determining the first internal potential amplitude of the voltage source converter and controlling the output voltage amplitude on the alternating-current side of the voltage source converter based on the first internal potential amplitude, reactive power-voltage control of the voltage source converter is achieved, helping to allow the voltage at the grid connection point to be adjusted to the reference value of voltage at the grid connection point.

In some embodiments, the determining a first internal potential amplitude of the voltage source converter based on the measured value of reactive power at the grid connection point, the measured value of voltage at the grid connection point, the reference value of reactive power at the grid connection point, and the reference value of voltage at the grid connection point includes:
determining a reactive power deviation at the grid connection point based on the measured value of reactive power at the grid connection point and the reference value of reactive power at the grid connection point;
determining a voltage deviation at the grid connection point based on the measured value of voltage at the grid connection point and the reference value of voltage at the grid connection point; and
performing a second integration process based on the reactive power deviation at the grid connection point and/or the voltage deviation at the grid connection point to obtain the first internal potential amplitude.

In some embodiments, the controlling the output voltage amplitude on the alternating-current side of the voltage source converter based on the first internal potential amplitude of the voltage source converter includes:
performing an outer voltage loop control process based on the first internal potential amplitude of the voltage source converter and the measured value of voltage at the grid connection point to obtain a current command value for an inner current loop;
performing an inner current amplitude limiting loop process based on the current command value to obtain an output voltage signal on the alternating-current side of the voltage source converter; and
controlling the output voltage amplitude on the alternating-current side of the voltage source converter based on the output voltage signal on the alternating-current side of the voltage source converter.

In some embodiments, the performing an outer voltage loop control process based on the first internal potential amplitude of the voltage source converter and the measured value of voltage at the grid connection point to obtain a current command value for an inner current loop includes:
performing a first PI adjustment process, a dynamic virtual impedance process, or a static virtual impedance process on the first internal potential amplitude of the voltage source converter and the measured value of voltage at the grid connection point to obtain the current command value for the inner current loop.

In some embodiments, the method further includes:
upon detecting that the energy storage system is in an initial grid connection stage, performing a pre-synchronization process on the output signal on the alternating-current side of the voltage source converter based on the measured value of voltage at the grid connection point, so that the internal potential amplitude and output phase angle (or referred to as a vector angle) of the voltage source converter can be respectively kept identical to the amplitude and vector angle of the voltage at the grid connection point, to minimize current impact at a grid connection moment, thereby facilitating smooth switching.

In some embodiments, the measured value of voltage at the grid connection point includes a first axis voltage measurement component and a second axis voltage measurement component, and the performing a pre-synchronization process on the output signal on the alternating-current side of the voltage source converter based on the measured value of voltage at the grid connection point includes:
performing a second PI adjustment process on the first axis voltage measurement component to obtain an adjusted first axis voltage measurement component;
performing a second integration process on the adjusted first axis voltage measurement component and a rated angular frequency of a grid to obtain an output voltage phase angle on the alternating-current side of the voltage source converter, where the output voltage phase angle is identical to a voltage phase angle at the grid connection point; and
performing a second closed-loop process on the second axis voltage measurement component to obtain a second internal potential amplitude of the voltage source converter, where the second internal potential amplitude is identical to a voltage amplitude at the grid connection point.

In the technical solution of these embodiments of this application, by performing a PI adjustment process and an integration process on the first axis voltage measurement component and performing a second closed-loop process on the second axis voltage measurement component, the internal potential amplitude and output voltage phase angle of the voltage source converter which are synchronous to the voltage at the grid connection point can be generated, to minimize current impact at the grid connection moment, thereby facilitating smooth switching.

In some embodiments, the performing a second closed-loop process on the second axis voltage measurement component to obtain a second internal potential amplitude of the voltage source converter includes:
determining a second feedback signal based on a historical internal potential amplitude; and
sequentially performing a third PI adjustment process and a third integration process on a difference signal between the second axis voltage measurement component and the second feedback signal to obtain the second internal potential amplitude.

In some embodiments, the measured value of the output electrical signal includes: a measured value of an output voltage on the direct-current side of the voltage source converter and a measured value of an output current on the direct-current side of the voltage source converter; and the controlling an output voltage of the direct-current energy storage valve based on a measured value of an output electrical signal on a direct-current side of the voltage source converter and a reference value of the output voltage of the direct-current energy storage valve includes:
performing a fourth PI adjustment process on a direct-current voltage difference between the measured value of the output voltage on the direct-current side of the voltage source converter and the reference value of the output voltage of the direct-current energy storage valve to obtain a direct current command value;
performing a fifth PI adjustment process on a direct current difference between the measured value of the output current on the direct-current side of the voltage source converter and the direct current command value to obtain an output voltage command value of the direct-current energy storage valve; and
controlling the output voltage of the direct-current energy storage valve based on the output voltage command value of the direct-current energy storage valve.

In the technical solution of these embodiments of this application, the output voltage of the direct-current energy storage valve is independently controlled based on the measured value of the output voltage on the direct-current side of the voltage source converter, the measured value of the output current on the direct-current side of the voltage source converter, and the reference value of the output voltage of the direct-current energy storage valve, so that the voltage source converter does not need to handle both direct-current side control and alternating-current side control, which reduces the complexity of a control loop of the voltage source converter and helps to improve the dynamic control performance of the output voltage of the direct-current energy storage valve, enabling grid-forming control of the energy storage system, thereby providing effective inertia support and voltage support for the grid.

According to a second aspect, this application provides a virtual synchronous control apparatus for an energy storage system, where the energy storage system includes a voltage source converter and a direct-current energy storage valve, and the apparatus includes:
a first control module, configured to control an output voltage of the direct-current energy storage valve based on a measured value of an output electrical signal on a direct-current side of the voltage source converter and a reference value of the output voltage of the direct-current energy storage valve; and
a second control module, configured to control an output signal on an alternating-current side of the voltage source converter based on a measured value of a grid connection point electrical signal and a reference value of the grid connection point electrical signal of the voltage source converter.

According to a third aspect, this application provides a control device for an energy storage system, including a memory and a processor, where the memory stores a computer program. The processor, when executing the computer program, implements the steps of the embodiments of the virtual synchronous control method for the energy storage system.

According to a fourth aspect, this application provides a computer-readable storage medium. The computer-readable storage medium stores a computer program. The computer program, when executed by a processor, implements the steps of the embodiments of the virtual synchronous control method for the energy storage system.

According to a fifth aspect, this application provides a computer program product, including a computer program. The computer program, when executed by a processor, implements the steps of the embodiments of the virtual synchronous control method for the energy storage system.

The above description is merely an overview of the technical solutions of this application. To understand the technical means of this application more clearly such that it can be implemented according to the content of the specification, and to make the above-mentioned and other purposes, features and advantages of this application more apparent, specific embodiments of this application are listed below.

### BRIEF DESCRIPTION OF DRAWINGS

Persons of ordinary skill in the art can clearly understand various other advantages and benefits by reading the detailed description of the preferred embodiments below. The accompanying drawings are merely intended to illustrate the preferred embodiments, but are not construed as a limitation on this application. Moreover, throughout the accompanying drawings, the same reference signs represent the same components. In the accompanying drawings:
FIG. 1 is a schematic structural diagram of an energy storage system according to some embodiments of this application;
FIG. 2 is a schematic framework diagram of virtual synchronous control of an energy storage system according to some embodiments of this application;
FIG. 3 is a schematic flowchart of a virtual synchronous control method for an energy storage system according to some embodiments of this application;
FIG. 4 is a schematic flowchart of a virtual synchronous control method for an energy storage system according to some other embodiments of this application;
FIG. 5 is a schematic flowchart of a control method for an output frequency on an alternating-current side of a voltage source converter according to some embodiments of this application;
FIG. 6A is a schematic flowchart of a first closed-loop control process method according to some embodiments of this application;
FIG. 6B is a schematic flowchart of a first integration process method according to some embodiments of this application;
FIG. 6C is a schematic flowchart of a control method for an output frequency according to some embodiments of this application;
FIG. 6D is a schematic flowchart of an active power-frequency control method according to some embodiments of this application;
FIG. 7 is a schematic flowchart of a control method for an output voltage amplitude on an alternating-current side of a voltage source converter according to some embodiments of this application;
FIG. 8A is a schematic flowchart of a method for determining a first internal potential amplitude of a voltage source converter according to some embodiments of this application;
FIG. 8B is a schematic flowchart of a reactive power-voltage control method according to some embodiments of this application;
FIG. 9A is a schematic flowchart of a control method for an output voltage amplitude on an alternating-current side of a voltage source converter according to some embodiments of this application;
FIG. 9B is a schematic flowchart of a first PI adjustment process method according to some embodiments of this application;
FIG. 9C is a schematic flowchart of a dynamic virtual impedance process method according to some embodiments of this application;
FIG. 9D is a schematic flowchart of a static virtual impedance process method according to some embodiments of this application;
FIG. 10 is a schematic flowchart of an active power amplitude limit adjustment method according to some embodiments of this application;
FIG. 11 is a schematic flowchart of an adjustment method for a damping coefficient and a latch coefficient according to some embodiments of this application;
FIG. 12 is a schematic flowchart of a method for determining a grid connection point fault detection signal according to some embodiments of this application;
FIG. 13A is a schematic flowchart of a pre-synchronization process method for an output signal on an alternating-current side of a voltage source converter according to some embodiments of this application;
FIG. 13B is a schematic flowchart of a method for determining an output voltage phase angle on an alternating-current side of a voltage source converter according to some embodiments of this application;
FIG. 13C is a schematic flowchart of a second closed-loop process method according to some embodiments of this application;
FIG. 13D is a schematic flowchart of a second closed-loop process method according to some embodiments of this application;
FIG. 14A is a schematic flowchart of a virtual synchronous control method for an energy storage system according to some other embodiments of this application;
FIG. 14B is a schematic flowchart of a fourth PI adjustment process method according to some embodiments of this application;
FIG. 14C is a schematic flowchart of a fifth PI adjustment process method according to some embodiments of this application;
FIG. 14D is a schematic flowchart of an output voltage control method for a direct-current energy storage valve according to some embodiments of this application;
FIG. 15 is a schematic framework diagram of virtual synchronous control of an energy storage system according to some embodiments of this application;
FIG. 16A is a schematic diagram of simulation results of an active power P at a grid connection point, a reactive power Q at the grid connection point, and a voltage amplitude Uₛ of an alternating-current grid according to an embodiment of this application;
FIG. 16B is a schematic diagram of simulation results of an output voltage u_{dc} of a direct-current energy storage valve, an output current i_{dc} of a voltage source converter, and an output frequency ω on an alternating-current side of the voltage source converter according to an embodiment of this application;
FIG. 17 is a schematic structural diagram of a virtual synchronous control apparatus for an energy storage system according to some embodiments of this application; and
FIG. 18 is a schematic structural diagram of a control device for an energy storage system according to some embodiments of this application.

### DESCRIPTION OF EMBODIMENTS

The following describes in detail some embodiments of the technical solutions of this application with reference to the accompanying drawings. The following embodiments are merely intended for a clearer description of the technical solutions of this application and therefore are merely used as examples which do not constitute any limitation on the protection scope of this application.

Unless otherwise defined, all technical and scientific terms used herein shall have the same meanings as commonly understood by persons skilled in the art to which this application pertains. The terms used herein are intended to merely describe specific embodiments rather than to limit this application. The terms "include", "comprise", and any other variations thereof in the specification, claims and brief description of drawings of this application are intended to cover non-exclusive inclusion.

In the description according to the embodiments of this application, the technical terms "first", "second", and the like are only used to distinguish different objects, and should not be understood as indicating or implying relative importance or implying the number, specific order, or primary and secondary relationship of indicated technical features. In the descriptions of the embodiments of this application, "a plurality of" means more than two (including two), unless otherwise specifically defined.

The virtual synchronous control method and apparatus, the device, and the storage medium for an energy storage system provided by the embodiments of this application may be applied to virtual synchronous control application scenarios for high-voltage direct-current directly-connected energy storage systems, and certainly they can also be applied to other application scenarios.

With the rapid development of new power systems dominated by new energy, the proportion of new energy in new power systems continues to increase, resulting in a lack of inertia and damping in the power systems, and thus causing relative weakness of the systems. Therefore, energy storage systems with high voltage, large capacity, and grid-friendly integration are becoming a new demand and trend, where they possess virtual inertia and damping support capabilities and grid-forming capabilities will be key indicators for the stable operation of new power systems.

Typically, the grid-forming control strategy for energy storage systems is mainly achieved through virtual synchronous generator (virtual synchronous generator, VSG) technology, which enables energy storage systems to transition from a current-source grid-following control mode to a voltage-source grid-forming control mode. Through VSG technology, energy storage systems are controlled to simulate the characteristics of a traditional synchronous generator, making the energy storage systems independent voltage sources capable of independently supplying loads while providing necessary inertia and damping support for the grid. This has significant research significance for the stable operation of new power systems.

With the development of energy storage technology, high-voltage direct-current directly-connected energy storage systems have become an important development direction. In high-voltage direct-current directly-connected energy storage systems, a voltage source converter (voltage source converter, VSC) and a direct-current energy storage valve are integrated in terms of topology and functionality, offering advantages such as high modularity, good economic benefits, and high operational stability. High-voltage direct-current directly-connected energy storage systems differ from traditional energy storage systems in topology and functionality. Direct-current sides of high-voltage direct-current directly-connected energy storage systems also need to be controlled, but a virtual synchronous control method for traditional energy storage systems is not applicable to high-voltage direct-current directly-connected energy storage systems. Therefore, how to perform virtual synchronous control for high-voltage direct-current directly-connected energy storage systems is an urgent issue to be addressed.

In addition, although the grid-connected inverters or VSCs based on VSG technology in the related art can simulate the characteristics of a synchronous generator and have effective inertia and damping support capabilities in the face of grid frequency and voltage amplitude fluctuations, VSG technology in the related art lacks current or power amplitude limiting capabilities when encountering severe grid faults (for example, a large degree of grid voltage drop), leading to an inability to suppress fault current impacts in a VSC valve, and thus resulting in poor fault ride-through performance of the system. Some other related research introduces virtual impedance/resistance to suppress impact currents, but the current-limiting effect of virtual impedance/resistance is relatively insufficient under severe short-circuit faults with a low response speed, causing a failure in meeting the stability requirements of new power systems.

To address the issue of how to perform virtual synchronous control for high-voltage direct-current directly-connected energy storage systems in the related art, the embodiments of this application propose a virtual synchronous control method for independently controlling a voltage source converter and a direct-current energy storage valve in energy storage systems, and the method is applicable to virtual synchronous control of high-voltage direct-current directly-connected energy storage systems, facilitating grid-forming control of high-voltage direct-current directly-connected energy storage systems, thereby improving the low-voltage fault ride-through capability of the energy storage system.

For ease of understanding, the structure of the energy storage system is exemplarily introduced first in the embodiments of this application. For example, the energy storage system in the embodiments of this application may include, but is not limited to, a high-voltage direct-current directly-connected energy storage system. Compared to traditional energy storage systems, high-voltage direct-current directly-connected energy storage systems can directly support the voltage source converter to operate in a virtual synchronous control mode, with higher voltage level, larger capacity, and stronger grid adjustment and support capabilities.

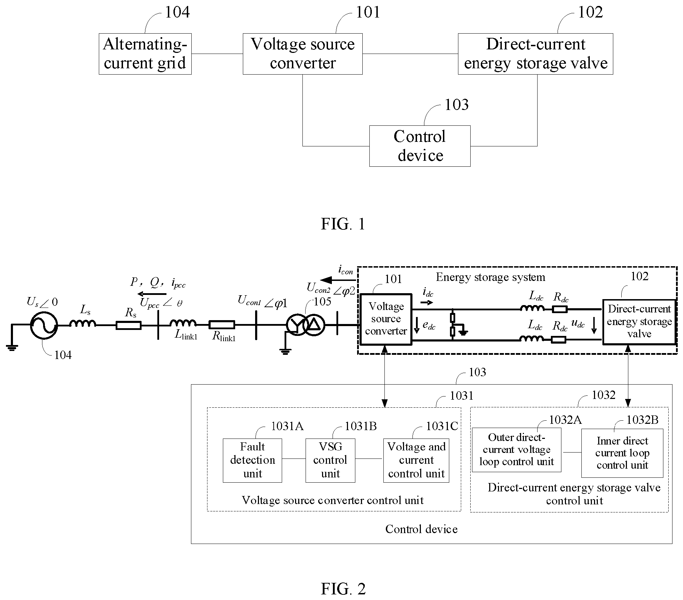

In some embodiments, FIG. 1 is a schematic structural diagram of an energy storage system according to some embodiments of this application. As shown in FIG. 1, the energy storage system of these embodiments of this application may include, but is not limited to, a voltage source converter 101, a direct-current energy storage valve 102, and a control device 103 for the energy storage system. An alternating-current side of the voltage source converter 101 is connected to an alternating-current grid 104, and a direct-current side of the voltage source converter 101 is connected to the direct-current energy storage valve 102. The control device 103 in these embodiments of this application may be configured to control the voltage source converter 101 and the direct-current energy storage valve 102 using the virtual synchronous control method for the energy storage system provided by these embodiments of this application.

It should be understood that when the voltage source converter 101 and the direct-current energy storage valve 102 are controlled by different control devices, the control device 103 may include a first control sub device corresponding to the voltage source converter 101 and a second control sub device corresponding to the direct-current energy storage valve 102. Correspondingly, the first control sub device may control the voltage source converter 101 using a control method related to the voltage source converter 101 in the virtual synchronous control method for the energy storage system provided by these embodiments of this application, and the second control sub device may control the direct-current energy storage valve 102 using a control method related to the direct-current energy storage valve 102 in the virtual synchronous control method for the energy storage system provided by these embodiments of this application

It should be noted that FIG. 1 provides an illustration in which the control device 103 of the energy storage system in these embodiments of this application is independent of the voltage source converter 101 and the direct-current energy storage valve 102. Certainly, the control device 103 of the energy storage system may alternatively be integrated into the voltage source converter 101 and/or the direct-current energy storage valve 102.

In some embodiments, FIG. 2 is a schematic framework diagram of virtual synchronous control for an energy storage system according to some embodiments of this application. As shown in FIG. 2, the energy storage system of these embodiments of this application may include, but is not limited to, a voltage source converter 101, a direct-current energy storage valve 102, and a control device 103 for the energy storage system. The voltage source converter 101 may be connected to an alternating-current grid 104 through a transformer 105. The parameters in FIG. 2 may refer to Table 1 below.

**Table 1 is a schematic table of the parameters in FIG. 2.**

| | |
|---|---|
| *Uₛ* | Voltage amplitude of alternating-current grid |
| *L*ₛ | Equivalent inductance of alternating-current grid |
| *R*ₛ | Equivalent resistance of alternating-current grid |
| P | Active power at grid connection point |
| *Q* | Reactive power at grid connection point |
| *i_{pcc}* | Alternating current at grid connection point |
| *U_{pcc}* | Alternating-current voltage amplitude at grid connection point |
| *θ* | Alternating-current voltage phase angle at grid connection point |
| *L*ₗᵢₙₖ₁ | Equivalent inductance on alternating-current grid side of voltage source converter |
| *R*ₗᵢₙₖ₁ | Equivalent resistance on alternating-current grid side of voltage source converter |
| *U_{con1}* | Output voltage amplitude on alternating-current grid side of voltage source converter |
| *φ*1 | Output voltage phase angle on alternating-current grid side of voltage source converter |
| *i_{con}* | Output current on alternating-current valve side of voltage source converter |
| *U_{con2}* | Output voltage amplitude on alternating-current valve side of voltage source converter |
| *φ*2 | Output voltage phase angle on alternating-current valve side of voltage source converter |
| *i_{dc}* | Output current on direct-current side of voltage source converter |
| *e_{dc}* | Output voltage on direct-current side of voltage source converter |
| *L_{dc}* | Direct-current inductance of direct-current energy storage valve |
| *R_{dc}* | Parasitic resistance of direct-current inductance of direct-current energy storage valve |
| *u_{dc}* | Output voltage of direct-current energy storage valve |

It should be noted that the voltage source converter 101 may be directly connected to the alternating-current grid 104 without a transformer 105, that is, the transformer 105 in FIG. 2 can be omitted. Correspondingly, for the alternating-current side of the voltage source converter, there is no need to distinguish whether it is an alternating-current grid side of the voltage source converter or an alternating-current valve side of the voltage source converter, or the alternating-current grid side of the voltage source converter and the alternating-current valve side of the voltage source converter are identical.

For example, the control device 103 in these embodiments of this application may include, but is not limited to, a voltage source converter control unit 1031 for controlling the voltage source converter 101 and a direct-current energy storage valve control unit 1032 for controlling the direct-current energy storage valve 102. The voltage source converter control unit 1031 may include, but is not limited to, a fault detection unit 1031A for detecting whether a fault occurs in the energy storage system, a VSG control unit 1031B, and a voltage and current control unit 1031C.

The VSG control unit 1031B may be configured to implement pre-synchronization process, active power-frequency control, and/or reactive power-voltage control for the voltage source converter. The voltage and current control unit 1031C may be used for outer voltage loop control process and/or inner current amplitude limiting loop process.

The direct-current energy storage valve control unit 1032 may include, but is not limited to, an outer direct-current voltage loop control unit 1032A for outer direct-current voltage loop process and inner direct current loop control unit 1032B for inner direct current loop process.

It should be noted that the following embodiments of this application provide exemplary descriptions of the related content of the above different processes.

Any measured value involved in the embodiments of this application may include, but is not limited to, a per-unit value of the measured value and/or a nominal value (or referred to as a non-per-unit value) of the measured value.

It should be understood that the per-unit value is a relative unit system, which is a numerical value denoting method commonly used in power system analysis and engineering calculation, representing a relative value of a physical quantity (nominal value) with respect to a specific reference value, measured in pu (which may also be considered dimensionless).

Any reference value involved in the embodiments of this application may include, but is not limited to, a per-unit value of the reference value and/or a nominal value of the reference value.

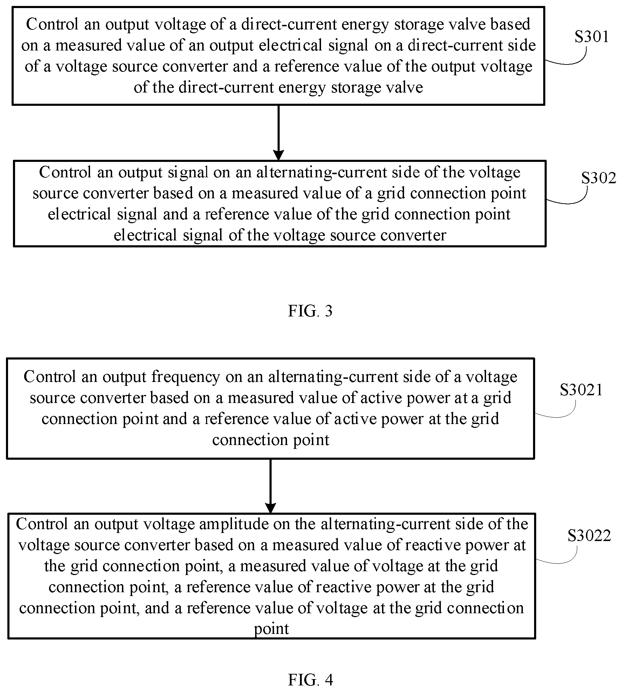

In some embodiments, FIG. 3 is a schematic flowchart of a virtual synchronous control method for an energy storage system according to some embodiments of this application. The method being applied to a virtual synchronous control device for the energy storage system is used as an example for description in these embodiments of this application. For example, the energy storage system in these embodiments of this application may include, but is not limited to, a voltage source converter and a direct-current energy storage valve. As shown in FIG. 3, the method in this embodiment of this application may include the following steps.

Step S301. Control an output voltage of the direct-current energy storage valve based on a measured value of an output electrical signal on a direct-current side of the voltage source converter and a reference value of the output voltage of the direct-current energy storage valve.

For example, the measured value of the output electrical signal on the direct-current side of the voltage source converter in these embodiments of this application may include, but is not limited to, a measured value of an output voltage on the direct-current side of the voltage source converter and/or a measured value of an output current on the direct-current side of the voltage source converter.

In this step, the virtual synchronous control device can control the output voltage of the direct-current energy storage valve based on the measured value of the output electrical signal on the direct-current side of the voltage source converter and the reference value of an output voltage of the direct-current energy storage valve.

For example, the virtual synchronous control device may perform an outer direct-current voltage loop process and/or inner direct current loop process based on the measured value of the output electrical signal on the direct-current side of the voltage source converter and the reference value of the output voltage of the direct-current energy storage valve to obtain an output voltage command value of the direct-current energy storage valve, so as to control the output voltage of the direct-current energy storage valve based on the output voltage command value.

The outer direct-current voltage loop process in these embodiments of this application may include, but is not limited to, a proportional and integral (proportional and integral, PI) adjustment process based on a direct-current voltage difference between the measured value of the output voltage on the direct-current side of the voltage source converter and the reference value of the output voltage of the direct-current energy storage valve.

The inner direct current loop process in these embodiments of this application may include, but is not limited to, a PI adjustment process based on a direct current difference between the measured value of the output current on the direct-current side of the voltage source converter and a reference value of the output current of the direct-current energy storage valve.

It can be seen that in this step, the output voltage of the direct-current energy storage valve can be independently controlled based on the measured value of the output electrical signal on the direct-current side of the voltage source converter and the reference value of the output voltage of the direct-current energy storage valve.

Step S302. Control an output signal on an alternating-current side of the voltage source converter based on a measured value of a grid connection point electrical signal and a reference value of the grid connection point electrical signal of the voltage source converter.

For example, the measured value of the grid connection point electrical signal in these embodiments of this application may include, but is not limited to, at least one of the following: a measured value of active power at the grid connection point, a measured value of reactive power at the grid connection point, and a measured value of voltage at the grid connection point.

For example, the reference value of the grid connection point electrical signal in these embodiments of this application may include, but is not limited to, at least one of the following: a reference value of active power at the grid connection point, a reference value of reactive power at the grid connection point, and a reference value of voltage at the grid connection point.

In this step, the virtual synchronous control device may control the output signal on the alternating-current side of the voltage source converter by controlling an output frequency and/or output voltage amplitude on the alternating-current side of the voltage source converter based on the measured value of the grid connection point electrical signal and the reference value of the grid connection point electrical signal.

For example, when a voltage source converter 101 is connected to an alternating-current grid 104 through a transformer 105, the alternating-current side of the voltage source converter in these embodiments of this application may include an alternating-current grid side of the voltage source converter and/or an alternating-current valve side of the voltage source converter.

For another example, when the voltage source converter 101 is directly connected to the alternating-current grid 104, for the alternating-current side of the voltage source converter in these embodiments of this application, there is no need to distinguish whether it is the alternating-current grid side of the voltage source converter or the alternating-current valve side of the voltage source converter, or the alternating-current grid side of the voltage source converter is the same as the alternating-current valve side of the voltage source converter.

It can be seen that in this step, the output signal on the alternating-current side of the voltage source converter can be independently controlled based on the measured value of the grid connection point electrical signal and the reference value of the grid connection point electrical signal of the voltage source converter.

According to the virtual synchronous control method for the energy storage system, the output voltage of the direct-current energy storage valve is controlled based on the measured value of the output electrical signal on the direct-current side of the voltage source converter and the reference value of the output voltage of the direct-current energy storage valve. Further, the output signal on the alternating-current side of the voltage source converter is controlled based on the measured value of the grid connection point electrical signal and the reference value of the grid connection point electrical signal of the voltage source converter. In these embodiments of this application, the output voltage of the direct-current energy storage valve can be independently controlled based on the measured value of the output electrical signal on the direct-current side of the voltage source converter and the reference value of the output voltage of the direct-current energy storage valve, and the output signal on the alternating-current side of the voltage source converter can be independently controlled based on the measured value of the grid connection point electrical signal and the reference value of the grid connection point electrical signal of the voltage source converter. It can be seen that, these embodiments of this application realize a virtual synchronous control method for independently controlling the voltage source converter and the direct-current energy storage valve in the energy storage system, and the method is applicable to virtual synchronous control of high-voltage direct-current directly-connected energy storage systems, facilitating grid-forming control of high-voltage direct-current directly-connected energy storage systems, thereby improving the low-voltage fault ride-through capability of the energy storage system. Additionally, by independently controlling the voltage source converter and the direct-current energy storage valve in the energy storage system, the voltage source converter does not need to handle both direct-current side control and alternating-current side control, thereby reducing the complexity of a control loop of the voltage source converter.

In some embodiments, FIG. 4 is a schematic flowchart of a virtual synchronous control method for an energy storage system according to some other embodiments of this application. Based on the above embodiments, the related content of "Control an output signal on an alternating-current side of the voltage source converter based on a measured value of a grid connection point electrical signal and a reference value of the grid connection point electrical signal of the voltage source converter" in the above step S302 is described in these embodiments. For example, the measured value of the grid connection point electrical signal in these embodiments of this application may include, but is not limited to, a measured value of active power at the grid connection point, a measured value of reactive power at the grid connection point, and a measured value of voltage at the grid connection point. The reference value of the grid connection point electrical signal may include, but is not limited to, a reference value of active power at the grid connection point, a reference value of reactive power at the grid connection point, and a reference value of voltage at the grid connection point. As shown in FIG. 4, the above step S302 may include the following steps.

Step S3021. Control an output frequency on the alternating-current side of the voltage source converter based on the measured value of active power at the grid connection point and the reference value of active power at the grid connection point.

In this step, the virtual synchronous control device may control the output frequency on the alternating-current side of the voltage source converter based on the measured value of active power at the grid connection point and the reference value of active power at the grid connection point, to achieve active power-frequency control of the voltage source converter, so that active power at the grid connection point can be adjusted to the reference value of active power at the grid connection point.

For example, the virtual synchronous control device may control the output frequency on the alternating-current side of the voltage source converter based on an active power deviation at the grid connection point between the measured value of active power at the grid connection point and the reference value of active power at the grid connection point, so that active power at the grid connection point can be adjusted to the reference value of active power at the grid connection point.

Step S3022. Control an output voltage amplitude on the alternating-current side of the voltage source converter based on the measured value of reactive power at the grid connection point, the measured value of voltage at the grid connection point, the reference value of reactive power at the grid connection point, and the reference value of voltage at the grid connection point.

In this step, the virtual synchronous control device may control the output voltage amplitude on the alternating-current side of the voltage source converter based on the measured value of reactive power at the grid connection point, the measured value of voltage at the grid connection point, the reference value of reactive power at the grid connection point, and the reference value of voltage at the grid connection point, to achieve reactive power-voltage control of the voltage source converter, so that voltage at the grid connection point can be adjusted to the reference value of voltage at the grid connection point.

For example, the virtual synchronous control device may control the output voltage amplitude on the alternating-current side of the voltage source converter based on the reactive power deviation at the grid connection point between the measured value of reactive power at the grid connection point and the reference value of reactive power at the grid connection point and/or a voltage deviation at the grid connection point between the measured value of voltage at the grid connection point and the reference value of voltage at the grid connection point, so that voltage at the grid connection point can be adjusted to the reference value of voltage at the grid connection point.

In conclusion, in these embodiments of this application, the output frequency on the alternating-current side of the voltage source converter is controlled based on the measured value of active power at the grid connection point and the reference value of active power at the grid connection point. Further, the output voltage amplitude on the alternating-current side of the voltage source converter is controlled based on the measured value of reactive power at the grid connection point, the measured value of voltage at the grid connection point, the reference value of reactive power at the grid connection point, and the reference value of voltage at the grid connection point. It can be seen that in these embodiments of this application, active power-frequency control of the voltage source converter is achieved based on the measured value of active power at the grid connection point and the reference value of active power at the grid connection point, and reactive power-voltage control of the voltage source converter is achieved based on the measured value of reactive power at the grid connection point, the measured value of voltage at the grid connection point, the reference value of reactive power at the grid connection point, and the reference value of voltage at the grid connection point. This achieves virtual synchronous control of active power and reactive power decoupling for the voltage source converter, and facilitating transient support for frequency at the grid connection point and voltage at the grid connection point, thereby further improving the low-voltage fault ride-through capability of the energy storage system.

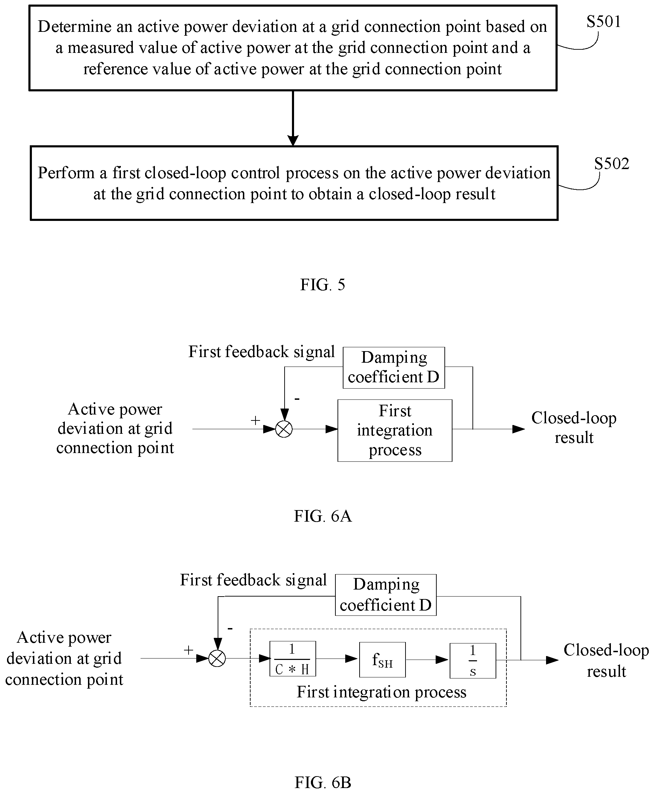

In some embodiments, FIG. 5 is a schematic flowchart of a control method for an output frequency on an alternating-current side of a voltage source converter according to some embodiments of this application. Based on the above embodiments, the related content of "Control an output frequency on the alternating-current side of the voltage source converter based on the measured value of active power at the grid connection point and the reference value of active power at the grid connection point" in the above step S3021 is exemplarily described in these embodiments. As shown in FIG. 5, the above step S3021 may include the following steps.

Step S501. Determine an active power deviation at the grid connection point based on the measured value of active power at the grid connection point and the reference value of active power at the grid connection point.

In this step, the virtual synchronous control device may determine the active power deviation at the grid connection point based on the measured value of active power at the grid connection point and the reference value of active power at the grid connection point, to control the output frequency on the alternating-current side of the voltage source converter based on the active power deviation at the grid connection point, thereby achieving active power-frequency control of the voltage source converter.

It should be noted that according to the active power-frequency control of the voltage source converter in these embodiments of this application, by simulating rotor inertia and governor droop characteristics of a synchronous machine, the active power deviation at the grid connection point can be converted into the output frequency on the alternating-current side of the voltage source converter.

In one possible implementation, the virtual synchronous control device may subtract the measured value of active power at the grid connection point from the reference value of active power at the grid connection point to obtain the active power deviation at the grid connection point.

In another possible implementation, the virtual synchronous control device may perform an amplitude limiting process on the reference value of active power at the grid connection point based on a maximum active power amplitude limit and a minimum active power amplitude limit to obtain an amplitude-limited reference value of active power at the grid connection point, and subtract the measured value of active power at the grid connection point from the amplitude-limited reference value at the grid connection point to obtain the active power deviation at the grid connection point.

In this implementation, the virtual synchronous control device may perform an amplitude limiting process on the reference value of active power at the grid connection point based on the maximum active power amplitude limit and the minimum active power amplitude limit, so that the amplitude-limited reference value of active power at the grid connection point can conform to the actual capability of the energy storage system. The maximum active power amplitude limit refers to the maximum active power amplitude limit at the grid connection point, and the minimum active power amplitude limit refers to the minimum active power amplitude limit at the grid connection point.

It should be noted that the maximum active power amplitude limit and the minimum active power amplitude limit in these embodiments of this application may be preset values, or values adjusted in real time based on a grid connection point fault detection signal. The grid connection point fault detection signal may be used for indicating whether a fault occurs in the energy storage system.

For example, if the reference value of active power at the grid connection point is greater than the maximum active power amplitude limit, the virtual synchronous control device may use the maximum active power amplitude limit as the amplitude-limited reference value of active power at the grid connection point.

For another example, if the reference value of active power at the grid connection point is less than or equal to the maximum active power amplitude limit and greater than or equal to the minimum active power amplitude limit, the virtual synchronous control device may use the reference value of active power at the grid connection point as the amplitude-limited reference value of active power at the grid connection point.

For another example, if the reference value of active power at the grid connection point is less than the minimum active power amplitude limit, the virtual synchronous control device may use the minimum active power amplitude limit as the amplitude-limited reference value of active power at the grid connection point.

Further, the virtual synchronous control device may subtract the measured value of active power at the grid connection point from the amplitude-limited reference value of active power at the grid connection point to obtain the active power deviation at the grid connection point, so as to more accurately control the output frequency on the alternating-current side of the voltage source converter based on the active power deviation at the grid connection point.

Step S502. Perform a first closed-loop control process on the active power deviation at the grid connection point to obtain a closed-loop result.

In this step, the virtual synchronous control device may perform a first closed-loop control process on the active power deviation at the grid connection point to enable control based on a feedback signal, thereby facilitating the acquisition of an accurate closed-loop result. The first closed-loop control process may include, but is not limited to, a closed-loop control method using a damping coefficient as a feedback coefficient, using a product of an inertia time constant and a preset coefficient C as an integration coefficient, and using a latch coefficient as a proportional coefficient.

For example, FIG. 6A is a schematic flowchart of a first closed-loop control process method according to some embodiments of this application. As shown in FIG. 6A, the virtual synchronous control device may determine a first feedback signal based on a historical closed-loop result and a damping coefficient D, and perform a first integration process on a difference signal between the active power deviation at the grid connection point and the first feedback signal to obtain the closed-loop result. The historical closed-loop result may include, but is not limited to, a result obtained by the virtual synchronous control device by performing the previous first closed-loop control process on the historical active power deviation at the grid connection point (or the active power deviation at the grid connection point at the previous moment).

In these embodiments of this application, the virtual synchronous control device may multiply the damping coefficient D by the historical closed-loop result to obtain the first feedback signal. Further, the virtual synchronous control device may subtract the first feedback signal from the active power deviation at the grid connection point to obtain a difference signal and perform a first integration process on the difference signal to obtain the closed-loop result.

It should be noted that the damping coefficient D in these embodiments of this application may be a preset value, or a value adjusted in real time based on the grid connection point fault detection signal.

For example, FIG. 6B is a schematic flowchart of a first integration process method according to some embodiments of this application. As shown in FIG. 6B, the virtual synchronous control device may perform a first integration process on the difference signal based on an inertia time constant H and a latch coefficient f_{SH}, to obtain the closed-loop result.

In these embodiments of this application, the virtual synchronous control device may perform the first integration process on the difference signal by using a product of the inertia time constant H and a preset coefficient C as an integration coefficient and using the latch coefficient f_{SH} as a proportional coefficient, to obtain the closed-loop result. For example, the preset coefficient C may include, but is not limited to, 2.

It should be noted that the latch coefficient f_{SH} in these embodiments of this application may be a preset value, or a value adjusted in real time based on the grid connection point fault detection signal.

Step S503. Control the output frequency based on the closed-loop result and a rated angular frequency of a grid.

In this step, the virtual synchronous control device may control the output frequency based on the closed-loop result and the rated angular frequency of the grid, where the rated angular frequency of the grid may include, but is not limited to, a per-unit value of the rated angular frequency of the grid and/or a nominal value (or referred to as a non-per-unit value) of the rated angular frequency of the grid.

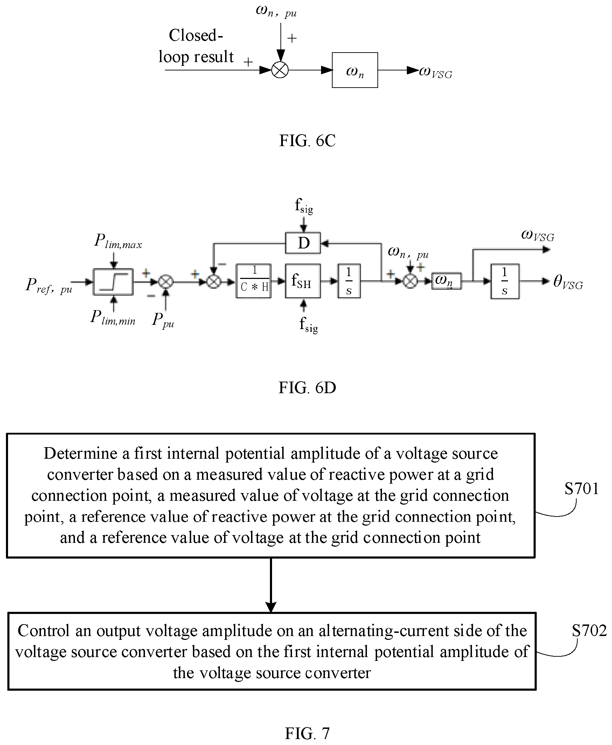

For example, FIG. 6C is a schematic flowchart of a control method for an output frequency according to some embodiments of this application. As shown in FIG. 6C, the virtual synchronous control device may add the closed-loop result to the per-unit value of the rated angular frequency of the grid ω_{n, pu} and multiply the sum by the nominal value of the rated angular frequency of the grid ωₙ to obtain the output frequency ω_{VSG}.

For ease of understanding, an overall process of an active power-frequency control method for the voltage source converter is described in the following embodiments of this application. FIG. 6D is a schematic flowchart of an active power-frequency control method according to some embodiments of this application. As shown in FIG. 6D, the virtual synchronous control device may perform an amplitude limiting process on the per-unit value of the reference value of active power at the grid connection point P_{ref, pu} based on a maximum active power amplitude limit P_{lim,max} and a minimum active power amplitude limit P_{lim,min} to obtain an amplitude-limited reference value of active power at the grid connection point.

Further, the virtual synchronous control device may subtract the per-unit value of the measured value of active power at the grid connection point Pₚᵤ from the amplitude-limited reference value of active power at the grid connection point to obtain the active power deviation at the grid connection point.

Further, the virtual synchronous control device may perform a first closed-loop control process on the active power deviation at the grid connection point to obtain a closed-loop result. The implementation of the first closed-loop control process may refer to the related content in the above embodiments, and details are not repeated herein.

Further, the virtual synchronous control device may add the closed-loop result to the per-unit value of the rated angular frequency of the grid ω_{n, pu} and multiply the sum by the nominal value of the rated angular frequency of the grid ωₙ to obtain the output frequency ω_{VSG}. By performing an integration process on the output frequency ω_{VSG}, a reference phase angle θ_{VSG} can be obtained, thereby enabling autonomous synchronization with the frequency and phase of the grid.

It should be noted that the maximum active power amplitude limit P_{lim,max}, the minimum active power amplitude limit P_{lim,min}, the damping coefficient D, or the latch coefficient f_{SH} in these embodiments of this application may be values adjusted in real time based on a grid connection point fault detection signal f_{sig}, so that the reference value of active power of the energy storage system during a fault does not exceed the actual capability of the system, thereby improving the transient stability of the energy storage system during the fault. The grid connection point fault detection signal may be used for indicating whether a fault occurs in the energy storage system.

In these embodiments of this application, when the reference phase angle θ_{VSG} is greater than a phase angle θ at the grid connection point, or the active power at the grid connection point is greater than the reference value of active power at the grid connection point, the virtual synchronous control device, through a VSG active power-frequency control method, reduces the output frequency on the alternating-current side of the voltage source converter, thereby reducing the output phase angle. Ultimately, the active power at the grid connection point is adjusted to the per-unit value of the reference value of active power at the grid connection point P_{ref, pu}, and the frequency at the grid connection point and the phase at the grid connection point are synchronized with the frequency of the grid and the phase of the grid, respectively.

In conclusion, in these embodiments of this application, the active power deviation at the grid connection point is determined based on the measured value of active power at the grid connection point and the reference value of active power at the grid connection point. Further, a first closed-loop control process is performed on the active power deviation at the grid connection point to obtain a closed-loop result, and the output frequency is controlled based on the closed-loop result and the rated angular frequency of the grid. It can be seen that by converting the active power deviation at the grid connection point into the output frequency on the alternating-current side of the voltage source converter, the active power-frequency control of the voltage source converter in these embodiments of this application facilitates the adjustment of the active power at the grid connection point to the reference value of active power at the grid connection point.

In some embodiments, FIG. 7 is a schematic flowchart of a control method for an output voltage amplitude on an alternating-current side of a voltage source converter according to some embodiments of this application. Based on the above embodiments, the related content of "Control an output voltage amplitude on the alternating-current side of the voltage source converter based on the measured value of reactive power at the grid connection point, the measured value of voltage at the grid connection point, the reference value of reactive power at the grid connection point, and the reference value of voltage at the grid connection point" in the above step S3022 is exemplarily described in these embodiments of this application. As shown in FIG. 7, the above step S3022 may include the following steps.

Step S701. Determine a first internal potential amplitude of the voltage source converter based on the measured value of reactive power at the grid connection point, the measured value of voltage at the grid connection point, the reference value of reactive power at the grid connection point, and the reference value of voltage at the grid connection point.

In this step, the virtual synchronous control device may determine a reactive power deviation at the grid connection point and a voltage deviation at the grid connection point based on the measured value of reactive power at the grid connection point, the measured value of voltage at the grid connection point, the reference value of reactive power at the grid connection point, and the reference value of voltage at the grid connection point, so as to determine the first internal potential amplitude of the voltage source converter, that is, an output voltage amplitude on an alternating-current valve side of the voltage source converter, based on the reactive power deviation at the grid connection point and/or the voltage deviation at the grid connection point, thereby achieving reactive power-voltage control of the voltage source converter.

It should be noted that according to the reactive power-voltage control of the voltage source converter in these embodiments of this application, by simulating an excitation adjustment equation of a synchronous machine, the reactive power deviation at the grid connection point and the voltage deviation at the grid connection point can be converted into the first internal potential amplitude of the voltage source converter.

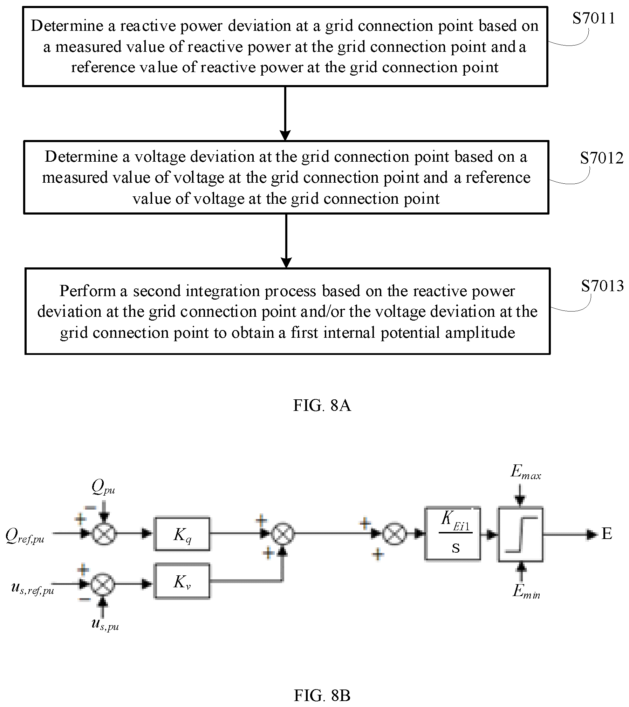

For example, FIG. 8A is a schematic flowchart of a method for determining a first internal potential amplitude of a voltage source converter according to some embodiments of this application. Based on the above embodiments, the related content of "Determine a first internal potential amplitude of the voltage source converter based on the measured value of reactive power at the grid connection point, the measured value of voltage at the grid connection point, the reference value of reactive power at the grid connection point, and the reference value of voltage at the grid connection point" in the above step S701 is exemplarily described in these embodiments of this application. As shown in FIG. 8A, the above step S701 may include the following steps.

Step S7011. Determine a reactive power deviation at the grid connection point based on the measured value of reactive power at the grid connection point and the reference value of reactive power at the grid connection point.

In this step, the virtual synchronous control device may determine the reactive power deviation at the grid connection point based on the measured value of reactive power at the grid connection point and the reference value of reactive power at the grid connection point, so as to determine the first internal potential amplitude of the voltage source converter based on the reactive power deviation at the grid connection point.

For example, the virtual synchronous control device may subtract the measured value of reactive power at the grid connection point from the reference value of reactive power at the grid connection point to obtain the reactive power deviation at the grid connection point.

Step S7012. Determine a voltage deviation at the grid connection point based on the measured value of voltage at the grid connection point and the reference value of voltage at the grid connection point.

In this step, the virtual synchronous control device may determine the voltage deviation at the grid connection point based on the measured value of voltage at the grid connection point and the reference value of voltage at the grid connection point, so as to determine the first internal potential amplitude of the voltage source converter based on the voltage deviation at the grid connection point.

For example, the virtual synchronous control device may subtract the measured value of voltage at the grid connection point from the reference value of voltage at the grid connection point to obtain the voltage deviation at the grid connection point.

Step S7013. Perform a second integration process based on the reactive power deviation at the grid connection point and/or the voltage deviation at the grid connection point to obtain the first internal potential amplitude.

In this step, the virtual synchronous control device may perform a second integration process based on the reactive power deviation at the grid connection point and/or the voltage deviation at the grid connection point to obtain the first internal potential amplitude.

In one possible implementation, the virtual synchronous control device may perform a second integration process on the reactive power deviation at the grid connection point or an adjusted reactive power deviation at the grid connection point to obtain the first internal potential amplitude.

In another possible implementation, the virtual synchronous control device may perform a second integration process on the voltage deviation at the grid connection point or an adjusted voltage deviation at the grid connection point to obtain the first internal potential amplitude.

In another possible implementation, the virtual synchronous control device may determine a deviation sum based on the reactive power deviation at the grid connection point and the voltage deviation at the grid connection point and perform a second integration process on the deviation sum to obtain the first internal potential amplitude. The deviation sum may include, but is not limited to, a first deviation sum or a second deviation sum.

For example, the virtual synchronous control device may add the reactive power deviation at the grid connection point and the voltage deviation at the grid connection point to obtain the first deviation sum and perform a second integration process on the first deviation sum to obtain the first internal potential amplitude.

For another example, the virtual synchronous control device may adjust the reactive power deviation at the grid connection point and the voltage deviation at the grid connection point respectively, and add the adjusted reactive power deviation at the grid connection point to the adjusted voltage deviation at the grid connection point to obtain the second deviation sum; further, the virtual synchronous control device may perform a second integration process on the second deviation sum to obtain the first internal potential amplitude.

To ensure that the first internal potential amplitude can better conform to the actual capability of the energy storage system, the virtual synchronous control device may perform a second integration process based on the reactive power deviation at the grid connection point and/or the voltage deviation at the grid connection point to obtain a first initial internal potential amplitude and perform an amplitude limiting process on the first initial internal potential amplitude based on a maximum internal potential amplitude and a minimum internal potential amplitude to obtain the first internal potential amplitude. The maximum internal potential amplitude refers to a maximum internal potential amplitude on the alternating-current side of the voltage source converter, and the minimum internal potential amplitude refers to a minimum internal potential amplitude on the alternating-current side of the voltage source converter.

It should be noted that the maximum internal potential amplitude and the minimum internal potential amplitude in these embodiments of this application may be preset values, or values obtained through other methods.

For example, if the first initial internal potential amplitude is greater than the maximum internal potential amplitude, the virtual synchronous control device may use the maximum internal potential amplitude as the first internal potential amplitude.

For another example, if the first initial internal potential amplitude is less than or equal to the maximum internal potential amplitude and greater than or equal to the minimum internal potential amplitude, the virtual synchronous control device may use the first initial internal potential amplitude as the first internal potential amplitude.

For another example, if the first initial internal potential amplitude is less than the minimum internal potential amplitude, the virtual synchronous control device may use the minimum internal potential amplitude as the first internal potential amplitude.

It can be seen that, in these embodiments of this application, by performing an amplitude limiting process on the first initial internal potential amplitude based on the maximum internal potential amplitude and the minimum internal potential amplitude, a more accurate first internal potential amplitude can be obtained, facilitating more accurate control of the output voltage amplitude on the alternating-current side of the voltage source converter based on the first internal potential amplitude.

For ease of understanding, an overall process of a reactive power-voltage control method for the voltage source converter is described in the following embodiments of this application. FIG. 8B is a schematic flowchart of a reactive power-voltage control method according to some embodiments of this application. As shown in FIG. 8B, the virtual synchronous control device may subtract the per-unit value of the measured value of reactive power at the grid connection point Qₚᵤ from the per-unit value of the reference value of reactive power at the grid connection point Q_{ref,pu} to obtain the reactive power deviation at the grid connection point.

Further, the virtual synchronous control device may subtract the per-unit value of the measured value of voltage at the grid connection point u_{s,pu} from the per-unit value of the reference value of voltage at the grid connection point u_{s,ref,pu} to obtain the voltage deviation at the grid connection point.

Further, the virtual synchronous control device may adjust the reactive power deviation at the grid connection point based on a reactive droop coefficient K_{q} to obtain an adjusted reactive power deviation at the grid connection point and adjust the voltage deviation at the grid connection point based on a voltage droop coefficient Kᵥ to obtain an adjusted voltage deviation at the grid connection point. Further, the virtual synchronous control device may add the adjusted reactive power deviation at the grid connection point to the adjusted voltage deviation at the grid connection point to obtain a second deviation sum.

It should be noted that by changing the values of the reactive droop coefficient K_{q} and/or the voltage droop coefficient Kᵥ, switching between a reactive power control mode and a voltage control mode can be achieved. When K_{q} is 1 and Kᵥ is 0, constant reactive power control is adopted; when K_{q} is 0 and Kᵥ is 1, constant voltage control is adopted; and when both K_{q} and Kᵥ are not 0, reactive power-voltage droop control. When both K_{q} and Kᵥ are provided with an appropriate value, reactive power at the grid connection point can be adaptively adjusted during a fault and a fault recovery process of the system, so as to support voltage stability at the grid connection point.

Further, the virtual synchronous control device may perform a second integration process on the second deviation sum based on a first internal potential control integration coefficient K_{Ei1} to obtain a first initial internal potential amplitude.

Further, the virtual synchronous control device may perform an amplitude limiting process on the first initial internal potential amplitude based on a maximum internal potential amplitude Eₘₐₓ and a minimum internal potential amplitude Eₘᵢₙ to obtain a first internal potential amplitude E.

It can be seen that according to the reactive power-voltage control in these embodiments of this application, the first internal potential amplitude can be obtained by simulating an excitation adjustment equation of a synchronous machine, using a deviation sum corresponding to the reactive power deviation at the grid connection point and the voltage deviation at the grid connection point as an error signal, and performing an integration process through an integrator.

Step S702: Control an output voltage amplitude on the alternating-current side of the voltage source converter based on the first internal potential amplitude of the voltage source converter.

In this step, the virtual synchronous control device may control the output voltage amplitude on the alternating-current side of the voltage source converter based on the first internal potential amplitude of the voltage source converter.

For example, the virtual synchronous control device may control the output voltage amplitude on the alternating-current side of the voltage source converter by performing an outer voltage loop control process and/or an inner current amplitude limiting loop process based on the first internal potential amplitude of the voltage source converter.

The outer voltage loop control process in these embodiments of this application may be used for but not limited to a PI adjustment process, a dynamic virtual impedance process, or a static virtual impedance process based on the first internal potential amplitude and the measured value of voltage at the grid connection point.

The inner current amplitude limiting loop process in these embodiments of this application may include, but is not limited to, a current amplitude limiting process and/or an inner current loop process.

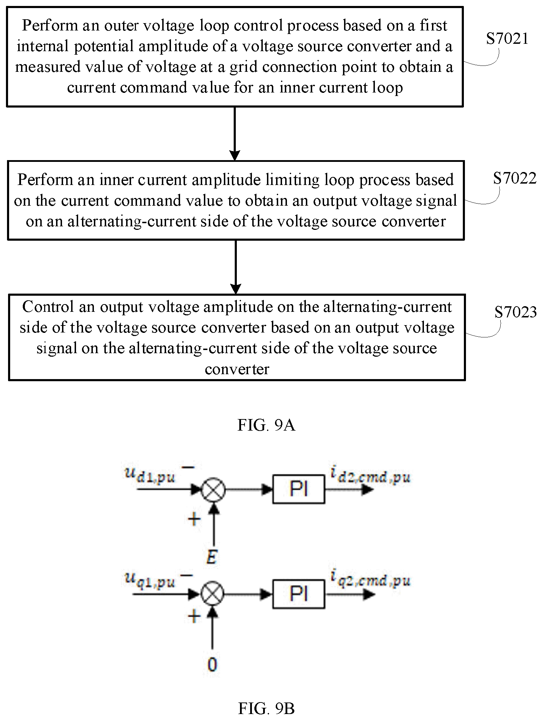

For example, FIG. 9A is a schematic flowchart of a control method for an output voltage amplitude on an alternating-current side of a voltage source converter according to some embodiments of this application. Based on the above embodiments, the related content of "Control an output voltage amplitude on the alternating-current side of the voltage source converter based on the first internal potential amplitude of the voltage source converter" in the above step S702 is exemplarily described in these embodiments of this application. As shown in FIG. 9A, the above step S702 may include the following steps.

Step S7021. Perform an outer voltage loop control process based on the first internal potential amplitude of the voltage source converter and the measured value of voltage at the grid connection point to obtain a current command value for an inner current loop.

In this step, the virtual synchronous control device may perform an outer voltage loop control process based on the first internal potential amplitude of the voltage source converter and the measured value of voltage at the grid connection point to obtain the current command value for the inner current loop.

For example, the measured value of voltage at the grid connection point in these embodiments of this application may include, but is not limited to, a first axis voltage measurement component and/or a second axis voltage measurement component. For example, the first axis voltage measurement component may be a measured value of a q-axis component of voltage at the grid connection point in a dq coordinate system (or referred to as a measured value of a q-axis component of an output voltage on the alternating-current grid side of the voltage source converter in the dq coordinate system), and the second axis voltage measurement component may be a measured value of a d-axis component of voltage at the grid connection point in the dq coordinate system (or referred to as a measured value of a d-axis component of the output voltage on the alternating-current grid side of the voltage source converter in the dq coordinate system).

The outer voltage loop control process in these embodiments of this application may include, but is not limited to, any one of the following: a first PI adjustment process, a dynamic virtual impedance process, or a static virtual impedance process.

The current command value for the inner current loop in these embodiments of this application may include, but is not limited to, a first axis current component command value for the inner current loop and/or a second axis current component command value for the inner current loop. For example, the first axis current component command value for the inner current loop may be a command value of a q-axis component of the current in the inner current loop (or referred to as an output current on the alternating-current valve side of the voltage source converter) in the dq coordinate system, and the second axis current component command value may be a command value of a d-axis component of the current in the inner current loop (or referred to as an output current on the alternating-current valve side of the voltage source converter) in the dq coordinate system.

For example, the virtual synchronous control device may perform a first PI adjustment process, a dynamic virtual impedance process, or a static virtual impedance process on the first internal potential amplitude of the voltage source converter and the measured value of voltage at the grid connection point to obtain the current command value for the inner current loop.

For example, FIG. 9B is a schematic flowchart of a first PI adjustment process method according to some embodiments of this application. As shown in FIG. 9B, in these embodiments of this application, on one hand, a virtual synchronous control device may subtract a per-unit value of a measured value of a d-axis component of voltage at a grid connection point in a dq coordinate system u_{d1,pu} from a first internal potential amplitude E and perform a PI process on the subtraction result to obtain a per-unit value of a command value of a d-axis component of current in an inner current loop in the dq coordinate system i_{d2,cmd,pu}. On the other hand, the virtual synchronous control device may subtract the per-unit value of the measured value of the q-axis component of the voltage at the grid connection point in the dq coordinate system u_{q1,pu} from zero and perform a PI process on the subtraction result to obtain the per-unit value of the command value of the q-axis component of the current in the inner current loop in the dq coordinate system i_{q2,cmd,pu}.

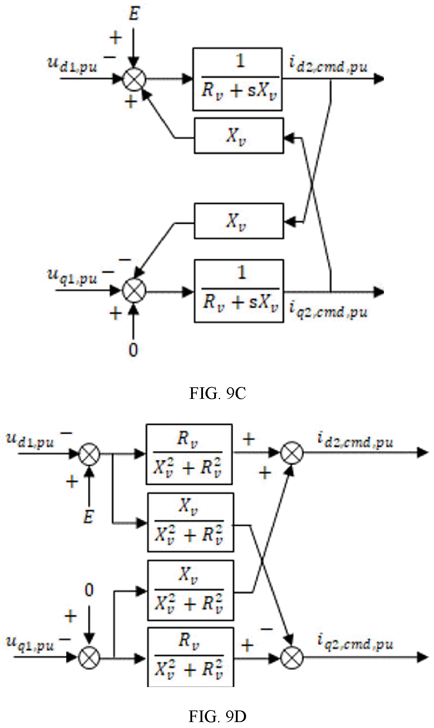

For example, FIG. 9C is a schematic flowchart of a dynamic virtual impedance process method according to some embodiments of this application. As shown in FIG. 9C, in these embodiments of this application, on one hand, the virtual synchronous control device may subtract the per-unit value of the measured value of the d-axis component of the voltage at the grid connection point in the dq coordinate system u_{d1,pu} from the first internal potential amplitude E and add the result to a product of the per-unit value of a historical command value of the q-axis component of the current in the inner current loop in the dq coordinate system and a virtual reactance Xᵥ. Further, the virtual synchronous control device may process the sum as shown in the first branch of FIG. 9C to obtain the per-unit value of the command value of the d-axis component of the current in the inner current loop in the dq coordinate system i_{d2,cmd,pu}, where Rᵥ represents the virtual resistance, and s represents the differential after Laplace transform.

On the other hand, the virtual synchronous control device may subtract a per-unit value of a measured value of a q-axis component of voltage at the grid connection point in the dq coordinate system u_{q1,pu} from zero and subtract a product of a per-unit value of a historical command value of the d-axis component of the current in the inner current loop in the dq coordinate system and the virtual reactance Xᵥ from the subtraction result. Further, the virtual synchronous control device may process the subtraction result as shown in the fourth branch of FIG. 9C to obtain the per-unit value of the command value of the q-axis component of the current in the inner current loop in the dq coordinate system i_{q2,cmd,pu.}

For example, FIG. 9D is a schematic flowchart of a static virtual impedance process method according to some embodiments of this application. As shown in FIG. 9D, the virtual synchronous control device may subtract the per-unit value of the measured value of the d-axis component of the voltage at the grid connection point in the dq coordinate system u_{d1,pu} from the first internal potential amplitude E to obtain a first subtraction result, and subtract the per-unit value of the measured value of the q-axis component of the voltage at the grid connection point in the dq coordinate system u_{q1,pu} from zero to obtain a second subtraction result.

Further, the virtual synchronous control device may process the first subtraction result as shown in the first branch of FIG. 9D to obtain a first processing result and process the second subtraction result as shown in the third branch of FIG. 9D to obtain a third processing result. Further, the virtual synchronous control device may add the first processing result to the third processing result to obtain the per-unit value of the command value of the d-axis component of the current in the inner current loop in the dq coordinate system i_{d2,cmd,pu}.

Further, the virtual synchronous control device may process the first subtraction result as shown in the second branch of FIG. 9D to obtain a second processing result and process the second subtraction result as shown in the fourth branch of FIG. 9D to obtain a fourth processing result. Further, the virtual synchronous control device may subtract the second processing result from the fourth processing result to obtain the per-unit value of the command value of the q-axis component of the current in the inner current loop in the dq coordinate system i_{q2,cmd,pu}.

Step S7022. Perform an inner current amplitude limiting loop process based on the current command value to obtain an output voltage signal on the alternating-current side of the voltage source converter.

For example, the inner current amplitude limiting loop process in these embodiments of this application may include, but is not limited to, a current amplitude limiting process and/or an inner current loop process.

The output voltage signal on the alternating-current side of the voltage source converter in these embodiments of this application may include, but is not limited to, a first axis output voltage component on the alternating-current side of the voltage source converter and/or a second axis output voltage component on the alternating-current side of the voltage source converter. For example, the first axis output voltage component on the alternating-current side of the voltage source converter may be the q-axis component of the output voltage on the alternating-current side of the voltage source converter in the dq coordinate system, and the second axis output voltage component on the alternating-current side of the voltage source converter may be the d-axis component of the output voltage on the alternating-current side of the voltage source converter in the dq coordinate system.

In this step, the virtual synchronous control device may perform a current amplitude limiting process on the current command value to obtain an amplitude-limited current command value (or referred to as a reference value of the output current on the alternating-current side of the voltage source converter). Further, the virtual synchronous control device may perform an inner current loop process on the amplitude-limited current command value to obtain the output voltage signal on the alternating-current side of the voltage source converter.

For example, the virtual synchronous control device may perform the inner current loop process on the amplitude-limited current command value based on the measured value of the output current and the measured value of the output voltage on the alternating-current side of the voltage source converter.

Step S7023. Control the output voltage amplitude on the alternating-current side of the voltage source converter based on the output voltage signal on the alternating-current side of the voltage source converter.

In this step, the virtual synchronous control device may generate a first control signal based on the output voltage signal on the alternating-current side of the voltage source converter, where the first control signal is used for controlling the output voltage amplitude on the alternating-current side of the voltage source converter.

For example, the virtual synchronous control device may perform a coordinate system transformation process on the output voltage signal on the alternating-current side of the voltage source converter to obtain a transformed output voltage signal on the alternating-current side of the voltage source converter and generate the first control signal based on the transformed output voltage signal on the alternating-current side of the voltage source converter. The coordinate system transformation process may include, but is not limited to, transformation from a dq coordinate system to an abc coordinate system; and the transformed output voltage signal on the alternating-current side of the voltage source converter may include, but is not limited to, an output voltage on the alternating-current side of the voltage source converter in the abc coordinate system.

In these embodiments of this application, an outer voltage loop control process and an inner current amplitude limiting loop process are sequentially performed on the first internal potential amplitude of the voltage source converter and the measured value of voltage at the grid connection point, to obtain the output voltage signal on the alternating-current side of the voltage source converter; and the output voltage amplitude on the alternating-current side of the voltage source converter is controlled based on the output voltage signal on the alternating-current side of the voltage source converter. It can be seen that these embodiments of this application can achieve accurate control of the output voltage amplitude on the alternating-current side of the voltage source converter based on the first internal potential amplitude of the voltage source converter.

In conclusion, in these embodiments of this application, the first internal potential amplitude of the voltage source converter is determined based on the measured value of reactive power at the grid connection point, the measured value of voltage at the grid connection point, the reference value of reactive power at the grid connection point, and the reference value of voltage at the grid connection point. Further, the output voltage amplitude on the alternating-current side of the voltage source converter is controlled based on the first internal potential amplitude of the voltage source converter. It can be seen that by converting the reactive power deviation at the grid connection point and/or the voltage deviation at the grid connection point into the first internal potential amplitude of the voltage source converter and controlling the output voltage amplitude on the alternating-current side of the voltage source converter based on the first internal potential amplitude, the reactive power-voltage control of the voltage source converter in these embodiments of this application facilitates the adjustment of the voltage at the grid connection point to the reference value of voltage at the grid connection point.

In some embodiments, based on the above embodiments, an adjustment process of the maximum active power amplitude limit and the minimum active power amplitude limit is exemplarily described in these embodiments of this application.

To ensure that the reference value of active power during a fault does not exceed the actual capability of the system and to mitigate the issue of fluctuations in voltage and active power at the grid connection point, in these embodiments of this application, the virtual synchronous control device for the energy storage system may further adjust the maximum active power amplitude limit P_{lim,max} and the minimum active power amplitude limit based on the grid connection point fault detection signal.

In one possible implementation, upon detecting that the grid connection point fault detection signal f_{sig} is used for indicating that there is a fault in the energy storage system, the virtual synchronous control device may adjust the maximum active power amplitude limit P_{lim,max} to a target maximum power amplitude limit P_{lim,max,pu} and adjust the minimum active power amplitude limit P_{lim,min} to a target minimum power amplitude limit P_{lim,min,pu}.

For example, if the grid connection point fault detection signal f_{sig} is a first preset signal, the grid connection point fault detection signal f_{sig} may be used for indicating that there is a fault in the energy storage system; and if the grid connection point fault detection signal f_{sig} is a second preset signal, the grid connection point fault detection signal f_{sig} may be used for indicating that there is no fault in the energy storage system. For example, the first preset signal may be 1, and the second preset signal may be 0.

It should be understood that when there is no fault in the energy storage system, the maximum active power amplitude limit P_{lim,max} may be a preset maximum power amplitude limit, and the minimum active power amplitude limit P_{lim,min} may be a preset minimum power amplitude limit. For example, the preset maximum power amplitude limit may be 1 pu, and the preset minimum power amplitude limit may be -1 pu.

For example, the target maximum power amplitude limit P_{lim,max,pu} and the target minimum power amplitude limit P_{lim,min,pu} in these embodiments of this application are both related to the measured value of reactive power at the grid connection point, the measured value of voltage at the grid connection point, and the drop amplitude of the measured value of voltage at the grid connection point during the fault. The measured value of reactive power at the grid connection point and the measured value of voltage at the grid connection point may correspond to a feasible domain of voltage at the grid connection point, and the drop amplitude of the measured value of voltage at the grid connection point during the fault may correspond to an amplitude drop of a positive sequence component of voltage at the grid connection point.

### (1) Feasible domain of voltage at grid connection point

The virtual synchronous control device may determine a first candidate maximum power amplitude limit P_{lim,max,us,pu} and a first candidate minimum power amplitude limit P_{lim,min,us,pu} based on the measured value of reactive power at the grid connection point and the measured value of voltage at the grid connection point.

For example, the virtual synchronous control device may determine the first candidate maximum power amplitude limit P_{lim,max,us,pu} based on the measured value of reactive power at the grid connection point and the measured value of voltage at the grid connection point using the following formula (1).${P}_{lim , max , us , pu} = \sqrt{{\left({u}_{s , pu}\times {i}_{s , lim , pu}\right)}^{2} - {Q}_{pu}^{2}}$

Here, u_{s,pu} represents the per-unit value of the measured value of voltage at the grid connection point, i_{s,lim,pu} represents a preset current amplitude limit, and Qₚᵤ represents the per-unit value of the measured value of reactive power at the grid connection point.

Certainly, the virtual synchronous control device may alternatively determine the first candidate maximum power amplitude limit P_{lim,max,us,pu} based on the measured value of reactive power at the grid connection point and the measured value of voltage at the grid connection point using other variations or equivalent formulas of the above formula (1).

Further, the virtual synchronous control device may determine the first candidate minimum power amplitude limit P_{lim,min,us,pu} based on the first candidate maximum power amplitude limit P_{lim,max,us,pu}.

For example, the virtual synchronous control device may determine the first candidate minimum power amplitude limit P_{lim,min,us,pu} based on the first candidate maximum power amplitude limit P_{lim,max,us,pu} using the following formula (2).${P}_{lim , min , us , pu} = - {P}_{lim , max , us , pu}$

Certainly, the virtual synchronous control device may alternatively determine the first candidate minimum power amplitude limit P_{lim,min,us,pu} based on the first candidate maximum power amplitude limit P_{lim,max,us,pu} using other variations or equivalent formulas of the above formula (2).

### (2) Amplitude drop of positive sequence component of voltage at grid connection point

Since the amplitude of the positive sequence component of voltage at the grid connection point is positively correlated with active power, the virtual synchronous control device may determine a second candidate maximum power amplitude limit P_{lim,max,ud1,pu} and a second candidate minimum power amplitude limit P_{lim,min,ud1,pu} based on the drop amplitude of the measured value of voltage at the grid connection point during the fault.

For example, the virtual synchronous control device may determine the second candidate maximum power amplitude limit P_{lim,max,ud1,pu} based on the drop amplitude of the measured value of voltage at the grid connection point during the fault using the following formula (3).${P}_{lim , max , ud 1 , pu} = {u}_{record}$

Here, u_{record} represents the drop amplitude of the measured value of voltage at the grid connection point during the fault.

Certainly, the virtual synchronous control device may alternatively determine the second candidate maximum power amplitude limit P_{lim,max,ud1,pu} based on the drop amplitude of the measured value of voltage at the grid connection point during the fault using other variations or equivalent formulas of the above formula (3).

Further, the virtual synchronous control device may determine the second candidate minimum power amplitude limit P_{lim,min,ud1,pu} based on the second candidate maximum power amplitude limit P_{lim,max,ud1,pu}.

For example, the virtual synchronous control device may determine the second candidate minimum power amplitude limit P_{lim,min,ud1,pu} based on the second candidate maximum power amplitude limit P_{lim,max,ud1,pu} using the following formula (4).${P}_{lim , min , ud 1 , pu} = - {P}_{lim , max , ud 1 , pu}$

Certainly, the virtual synchronous control device may alternatively determine the second candidate minimum power amplitude limit P_{lim,min,ud1,pu} based on the second candidate maximum power amplitude limit P_{lim,max,ud1,pu} using other variations or equivalent formulas of the above formula (4).

### (3) Determine target power amplitude limit based on candidate power amplitude limit

The virtual synchronous control device may select the minimum value between the first candidate maximum power amplitude limit P_{lim,max,us,pu} and the second candidate maximum power amplitude limit P_{lim,max,ud1,pu} as the target maximum power amplitude limit P_{lim,max,pu}, and select the maximum value between the first candidate minimum power amplitude limit P_{lim,min,us,pu} and the second candidate minimum power amplitude limit P_{lim,min,ud1,pu} as the target minimum power amplitude limit P_{lim,min,pu}.

Certainly, the virtual synchronous control device may alternatively determine the target maximum power amplitude limit P_{lim,max,pu} and the target minimum power amplitude limit P_{lim,min,pu} using other methods.

In another possible implementation, upon detecting that the grid connection point fault detection signal f_{sig} is used for indicating that the fault is cleared within a first preset duration, the virtual synchronous control device may adjust the maximum active power amplitude limit P_{lim,max} from the target maximum power amplitude limit P_{lim,max,pu} to a preset maximum power amplitude limit, and adjust the minimum active power amplitude limit P_{lim,min} from the target minimum power amplitude limit P_{lim,min,pu} to a preset minimum power amplitude limit.

For example, the virtual synchronous control device may adjust the maximum active power amplitude limit P_{lim,max} from the target maximum power amplitude limit P_{lim,max,pu} to the preset maximum power amplitude limit at a first preset rate, and adjust the minimum active power amplitude limit P_{lim,min} from the target minimum power amplitude limit P_{lim,min,pu} to the preset minimum power amplitude limit at a second preset rate.

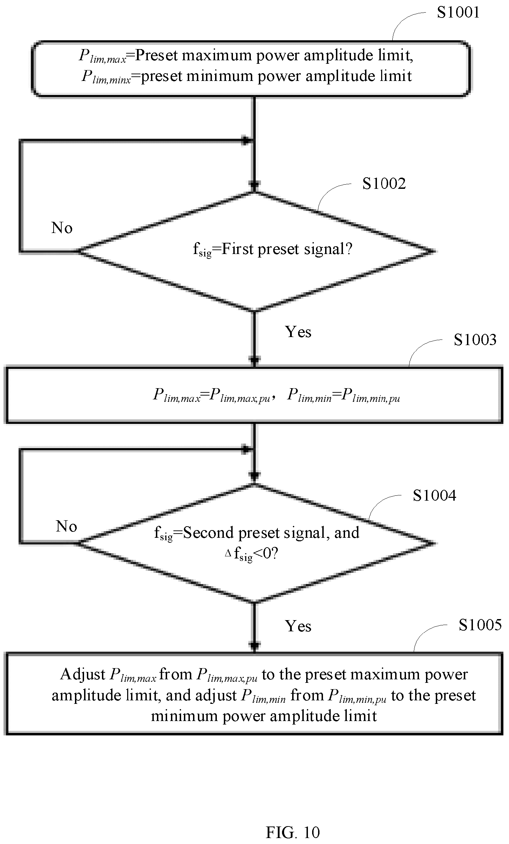

For ease of understanding, the following embodiments of this application provide an exemplary description of the overall process of the active power amplitude limit adjustment method. FIG. 10 is a schematic flowchart of an active power amplitude limit adjustment method according to some embodiments of this application. As shown in FIG. 10, the method of these embodiments of this application may include the following steps.

Step S1001: In an initial state, the virtual synchronous control device may set the maximum active power amplitude limit P_{lim,max} to a preset maximum power amplitude limit and set the minimum active power amplitude limit P_{lim,min} to a preset minimum power amplitude limit.

Step S1002: The virtual synchronous control device may detect whether the grid connection point fault detection signal f_{sig} is a first preset signal.

Upon detecting that the grid connection point fault detection signal f_{sig} is the first preset signal, that is, upon detecting that there is a fault in the energy storage system based on the grid connection point fault detection signal f_{sig}, execute step S1003; and upon detecting that the grid connection point fault detection signal f_{sig} is not the first preset signal, that is, upon detecting that there is no fault in the energy storage system based on the grid connection point fault detection signal f_{sig}, return to execute step S1002.

Step S1003: The virtual synchronous control device adjusts the maximum active power amplitude limit P_{lim,max} to the target maximum power amplitude limit P_{lim,max,pu} and adjusts the minimum active power amplitude limit P_{lim,min} to the target minimum power amplitude limit P_{lim,min,pu}.

Step S1004: The virtual synchronous control device may detect whether the grid connection point fault detection signal f_{sig} is a second preset signal and whether a change in the grid connection point fault detection signal Δf_{sig} is less than 0.

Upon detecting that the grid connection point fault detection signal f_{sig} is the second preset signal and the change in the grid connection point fault detection signal Δf_{sig} is less than 0, that is, upon detecting that the grid connection point fault detection signal f_{sig} is used for indicating that the fault is cleared within a first preset duration, execute step S1005; and upon detecting that the grid connection point fault detection signal f_{sig} is not the second preset signal or the change in the grid connection point fault detection signal Δf_{sig} is not less than 0, that is, upon detecting that the grid connection point fault detection signal f_{sig} is used for indicating that the fault is not cleared within the first preset duration, return to execute step S1004.

Step S1005: The virtual synchronous control device may adjust the maximum active power amplitude limit P_{lim,max} from the target maximum power amplitude limit P_{lim,max,pu} to the preset maximum power amplitude limit and adjust the minimum active power amplitude limit P_{lim,min} from the target minimum power amplitude limit P_{lim,min,pu} to the preset minimum power amplitude limit.

In conclusion, in these embodiments of this application, the target maximum power amplitude limit and the target minimum power amplitude limit are adjusted based on the measured value of reactive power at the grid connection point, the measured value of voltage at the grid connection point, and the drop amplitude of the measured value of voltage at the grid connection point during the fault, ensuring that the reference value of active power of the energy storage system during the fault does not exceed the actual capability of the system, thereby mitigating the issue of periodic changes in voltage at the grid connection point and significant fluctuation in active power due to continuous increase in power angle when the active power input is constantly greater than zero, thereby improving the transient stability of the energy storage system during the fault.

In some embodiments, based on the above embodiments, these embodiments of this application provide an exemplary description of an adjustment process of the damping coefficient and latch coefficient.

To further prevent power angle movement during a fault to avoid periodic fluctuation in voltage at the grid connection point and mitigate the issue of significant power angle fluctuation after fault recovery, the core solution proposed in these embodiments of this application is to minimize an absolute value of ΔPₚᵤ = P_{ref,pu} - Pₚᵤ using the following two ways: (1) adaptively increasing the damping coefficient D; and (2) adaptively adjusting the latch coefficient to adjust an integration procedure of active frequency.

In these embodiments of this application, the virtual synchronous control device for the energy storage system may alternatively adjust the damping coefficient D and the latch coefficient f_{SH} based on the grid connection point fault detection signal.

In one possible implementation, upon detecting that the grid connection point fault detection signal f_{sig} is used for indicating that there is a fault in the energy storage system, the virtual synchronous control device may adjust the damping coefficient D to a target damping coefficient D_{f} and adjust the latch coefficient f_{SH} to a target latch coefficient. For example, the target latch coefficient may be zero. Correspondingly, the integration procedure of the first integration process shown in FIG. 6C can be expressed as the following formula (5). ${G}_{i} \left(s\right) = {f}_{SH} \times \frac{1}{2 Hs} = 0$

It should be understood that when there is no fault in the energy storage system, the damping coefficient D may be a preset damping coefficient D₀, and the latch coefficient f_{SH} may be a preset latch coefficient. For example, the preset latch coefficient may be 1. Correspondingly, the integration procedure of the first integration process shown in FIG. 6C can be expressed as the following formula (6).${G}_{i} \left(s\right) = {f}_{SH} \times \frac{1}{2 Hs} = \frac{1}{2 Hs}$

The target damping coefficient D_{f} in these embodiments of this application may be related to an offset of active power at the grid connection point during the fault and an allowable frequency offset during the fault.

For example, the virtual synchronous control device may determine the target damping coefficient D_{f} based on the offset of active power at the grid connection point during the fault ΔP and the allowable frequency offset during the fault Δf using the following formula (7).${D}_{f} = - \frac{ΔP}{Δf} \times \frac{{f}_{b}}{{S}_{b}} = - \frac{{P}_{ref , pu} - {P}_{lim , max , pu}}{- 0.1 Hz} \times 50 Hz$

Here, f_{b} represents a frequency reference value, generally 50 Hz; S_{b} represents an alternating-current power reference value; and P*_{ref,pu}* represents a per-unit value of the reference value of active power at the grid connection point.

Certainly, the virtual synchronous control device may alternatively determine the target damping coefficient D_{f} based on the offset of active power at the grid connection point during the fault ΔP and the allowable frequency offset during the fault Δf using other variations or equivalent formulas of the above formula (7).

In another possible implementation, upon detecting that the grid connection point fault detection signal f_{sig} is used for indicating that the fault is cleared within a second preset duration, the virtual synchronous control device may adjust the damping coefficient D from the target damping coefficient D_{f} to the preset damping coefficient D₀ and adjust the latch coefficient f_{SH} from the target latch coefficient to the preset latch coefficient.

For example, the virtual synchronous control device may adjust the damping coefficient D from the target damping coefficient D_{f} to the preset damping coefficient D₀ at a third preset rate to address the issue of power angle fluctuation after fault recovery.

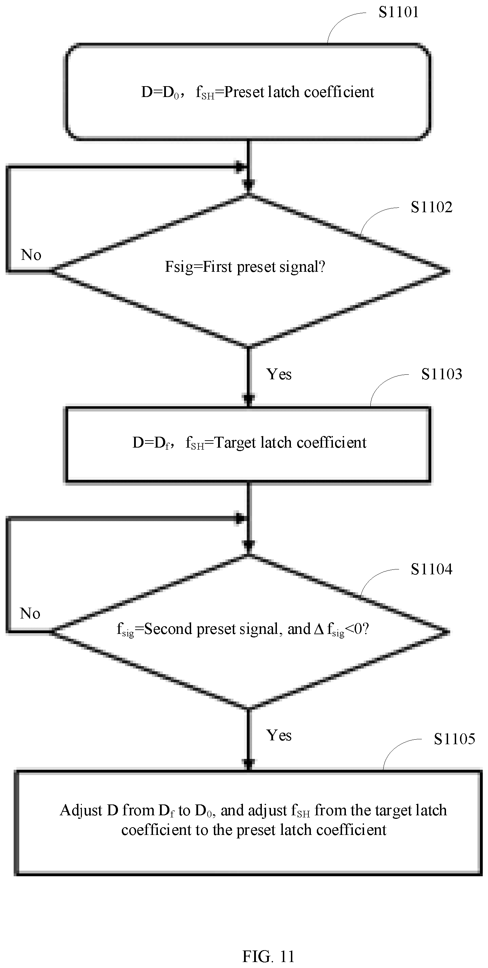

For ease of understanding, the following embodiments of this application provide an exemplary description of an overall process of an adjustment method for the damping coefficient D and the latch coefficient f_{SH}. FIG. 11 is a schematic flowchart of an adjustment method for a damping coefficient and a latch coefficient according to some embodiments of this application. As shown in FIG. 11, the method of these embodiments of this application may include the following steps.

Step S1101: In an initial state, the virtual synchronous control device may set the damping coefficient D to a preset damping coefficient D₀ and set the latch coefficient f_{SH} to a preset latch coefficient.

Step S1102: The virtual synchronous control device may detect whether the grid connection point fault detection signal f_{sig} is a first preset signal.

Upon detecting that the grid connection point fault detection signal f_{sig} is the first preset signal, that is, upon detecting that there is a fault in the energy storage system based on the grid connection point fault detection signal f_{sig}, execute step S1103; and upon detecting that the grid connection point fault detection signal f_{sig} is not the first preset signal, that is, upon detecting that there is no fault in the energy storage system based on the grid connection point fault detection signal f_{sig}, return to execute step S1102.

Step S1103: The virtual synchronous control device adjusts the damping coefficient D to the target damping coefficient D_{f} and adjusts the latch coefficient f_{SH} to the target latch coefficient.

Step S1104: The virtual synchronous control device may detect whether the grid connection point fault detection signal f_{sig} is a second preset signal and whether a change in the grid connection point fault detection signal Δf_{sig} is less than 0.

Upon detecting that the grid connection point fault detection signal f_{sig} is the second preset signal and the change in the grid connection point fault detection signal Δf_{sig} is less than 0, that is, upon detecting that the grid connection point fault detection signal f_{sig} is used for indicating that the fault is cleared within a second preset duration, execute step S1105; and upon detecting that the grid connection point fault detection signal f_{sig} is not the second preset signal or the change in the grid connection point fault detection signal Δf_{sig} is not less than 0, that is, upon detecting that the grid connection point fault detection signal f_{sig} is used for indicating that the fault is not cleared within the second preset duration, return to execute step S1104.

Step S1105: The virtual synchronous control device may adjust the damping coefficient D from the target damping coefficient D_{f} to the preset damping coefficient D₀ and adjust the latch coefficient f_{SH} from the target latch coefficient to the preset latch coefficient.

In conclusion, in these embodiments of this application, by adaptively adjusting the damping coefficient and the latch coefficient to adjust the integration procedure of the active frequency, the power angle movement during the fault can be further reduced, minimizing the absolute value of the active power deviation. This mitigates significant power angle fluctuation and continuous periodic fluctuation in voltage at the grid connection point after fault recovery, thereby improving the transient stability of the energy storage system during the fault recovery process.

In some embodiments, based on the above embodiments, these embodiments of this application provide an exemplary description of a process for determining the grid connection point fault detection signal.

In these embodiments of this application, the virtual synchronous control device for the energy storage system may alternatively determine the grid connection point fault detection signal based on the measured value of voltage at the grid connection point, a preset fault detection threshold, and a preset fault clearance threshold. For example, the measured value of voltage at the grid connection point may include, but is not limited to, a second axis voltage measurement component. For example, the second axis voltage measurement component may be the measured value of the d-axis component of the voltage at the grid connection point in the dq coordinate system u_{d1,pu}.

For example, in these embodiments of this application, the virtual synchronous control device determines the grid connection point fault detection signal by comparing the measured value of voltage at the grid connection point with the preset fault detection threshold and the preset fault clearance threshold.

In one possible implementation, upon detecting that a change value of the measured value of voltage at the grid connection point is less than 0 and the measured value of voltage at the grid connection point is less than or equal to the preset fault detection threshold fault_{thd} within a third preset duration, the virtual synchronous control device may determine that the grid connection point fault detection signal f_{sig} is used for indicating that there is a fault in the energy storage system, and record a drop amplitude of the measured value of voltage at the grid connection point during the fault u_{record}, where the drop amplitude u_{record} may be equal to the measured value of voltage at the grid connection point. It should be understood that when there is no fault in the energy storage system, the drop amplitude u_{record} may be a preset drop amplitude. For example, the preset drop amplitude may include, but is not limited to, 1 pu.

In another possible implementation, upon detecting that the change value of the measured value of voltage at the grid connection point is greater than 0 and the measured value of voltage at the grid connection point is greater than or equal to the preset fault clearance threshold clear_{thd}, the virtual synchronous control device may determine that the grid connection point fault detection signal f_{sig} is used for indicating that the fault of the energy storage system is cleared within a fourth preset duration, and adjust the drop amplitude of the measured value of voltage at the grid connection point during the fault u_{record} to a preset drop amplitude.

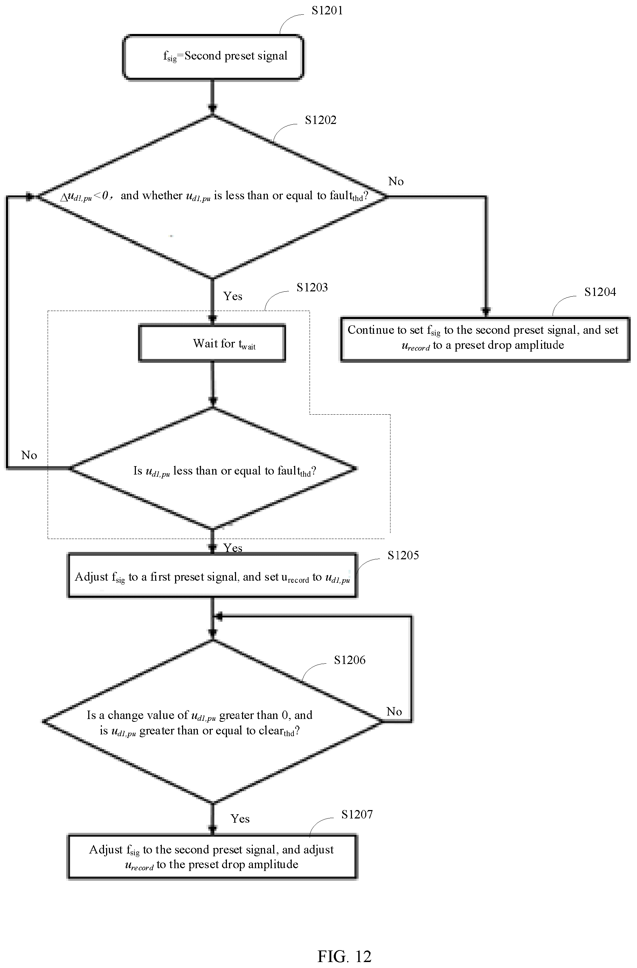

For ease of understanding, the following embodiments of this application provide an exemplary description of an overall process of a method for determining a grid connection point fault detection signal. FIG. 12 is a schematic flowchart of a method for determining a grid connection point fault detection signal according to some embodiments of this application. As shown in FIG. 12, the method of these embodiments of this application may include the following steps.

Step S1201: In an initial state, the virtual synchronous control device may set the grid connection point fault detection signal f_{sig} to a second preset signal.

Step S1202: The virtual synchronous control device may detect whether the change value of the measured value of voltage at the grid connection point Δu_{d1,pu} is less than 0 and whether the measured value of voltage at the grid connection point u_{d1,pu} is less than or equal to the preset fault detection threshold fault_{thd}.

Upon detecting that the change value of the measured value of voltage at the grid connection point Δu_{d1,pu} is less than 0 and the measured value of voltage at the grid connection point u_{d1,pu} is less than or equal to the preset fault detection threshold fault_{thd}, execute step S1203; and upon detecting that the change value of the measured value of voltage at the grid connection point Δu_{d1,pu} is not less than 0 or the measured value of voltage at the grid connection point u_{d1,pu} is greater than the preset fault detection threshold fault_{thd}, execute step S1204.

Step S1203: The virtual synchronous control device may wait for a third preset duration t_{wait} and detect whether the measured value of voltage at the grid connection point u_{d1,pu} is less than or equal to the preset fault detection threshold fault_{thd}, where the third preset duration t_{wait} may include, but is not limited to, 5 ms.

Upon detecting that the measured value of voltage at the grid connection point u_{d1,pu} is less than or equal to the preset fault detection threshold fault_{thd}, execute step S1205; and upon detecting that the measured value of voltage at the grid connection point u_{d1,pu} is greater than the preset fault detection threshold fault_{thd}, return to execute step S1202.

Step S1204: The virtual synchronous control device may still set the grid connection point fault detection signal f_{sig} to the second preset signal and set the drop amplitude u_{record} to a preset drop amplitude.

Step S1205: The virtual synchronous control device may adjust the grid connection point fault detection signal f_{sig} to the first preset signal and set the drop amplitude u_{record} to the measured value of voltage at the grid connection point u_{d1,pu}.

Step S1206: The virtual synchronous control device may detect whether the change value of the measured value of voltage at the grid connection point Δu_{d1,pu} is greater than 0 and whether the measured value of voltage at the grid connection point u_{d1,pu} is greater than or equal to the preset fault clearance threshold clear_{thd}.

Upon detecting that the change value of the measured value of voltage at the grid connection point Δu_{d1,pu} is greater than 0 and the measured value of voltage at the grid connection point u_{d1,pu} is greater than or equal to the preset fault clearance threshold clear_{thd}, execute step S1207; and upon detecting that the change value of the measured value of voltage at the grid connection point Δu_{d1,pu} is not greater than 0 or the measured value of voltage at the grid connection point u_{d1,pu} is less than the preset fault clearance threshold clear_{thd}, return to execute step S1206.

Step S1207: The virtual synchronous control device may adjust the grid connection point fault detection signal f_{sig} to the second preset signal and adjust the drop amplitude of the measured value of voltage at the grid connection point during the fault u_{record} to a preset drop amplitude.

In conclusion, in these embodiments of this application, the grid connection point fault detection signal is determined based on the measured value of voltage at the grid connection point, the preset fault detection threshold, and the preset fault clearance threshold, so that the active power amplitude limit, the damping coefficient, and the latch coefficient can be adjusted based on the grid connection point fault detection signal, ensuring that the reference value of active power of the energy storage system during the fault does not exceed the actual capability of the system, thereby improving the transient stability of the energy storage system during the fault.

In some embodiments, based on the above embodiments, in these embodiments of this application, the virtual synchronous control device of the energy storage system may further perform a pre-synchronization process on the output signal on the alternating-current side of the voltage source converter based on the measured value of voltage at the grid connection point upon detecting that the energy storage system is in an initial grid connection stage, so that the internal potential amplitude and output phase angle (or referred to as a vector angle) of the voltage source converter can be respectively kept identical to the amplitude and vector angle of voltage at the grid connection point, to minimize current impact at a grid connection moment, thereby facilitating smooth switching.

It should be noted that the virtual synchronous control device exits the pre-synchronization process procedure after completing the pre-synchronization process.

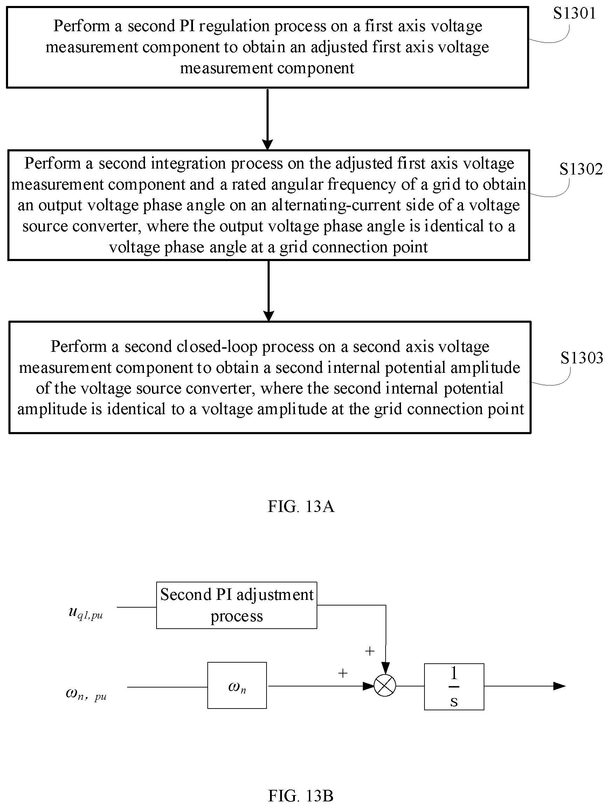

FIG. 13A is a schematic flowchart of a pre-synchronization process method for an output signal on an alternating-current side of a voltage source converter according to some embodiments of this application. As shown in FIG. 13A, the pre-synchronization process method of these embodiments of this application may include the following steps.

Step S1301. Perform a second PI adjustment process on the first axis voltage measurement component to obtain an adjusted first axis voltage measurement component.

For example, the measured value of voltage at the grid connection point in these embodiments of this application may include, but is not limited to, a first axis voltage measurement component and a second axis voltage measurement component. For example, the first axis voltage measurement component may be a measured value of a q-axis component of voltage at the grid connection point in a dq coordinate system, and the second axis voltage measurement component may be a measured value of a d-axis component of voltage at the grid connection point in the dq coordinate system.

In this step, the virtual synchronous control device may perform a second PI adjustment process on the first axis voltage measurement component to obtain an adjusted first axis voltage measurement component.

Step S1302. Perform a second integration process on the adjusted first axis voltage measurement component and a rated angular frequency of a grid to obtain an output voltage phase angle on the alternating-current side of the voltage source converter, where the output voltage phase angle is identical to a voltage phase angle at the grid connection point.

For example, the rated angular frequency of the grid may include, but is not limited to, a per-unit value of the rated angular frequency of the grid and/or a nominal value (or referred to as a non-per-unit value) of the rated angular frequency of the grid.

In this step, the virtual synchronous control device may perform a second integration process on the adjusted first axis voltage measurement component and the rated angular frequency of the grid to obtain the output voltage phase angle on the alternating-current side of the voltage source converter, so that the output voltage phase angle is identical to the voltage phase angle at the grid connection point.

For example, FIG. 13B is a schematic flowchart of a method for determining an output voltage phase angle on an alternating-current side of a voltage source converter according to some embodiments of this application. As shown in FIG. 13B, the virtual synchronous control device may perform a second PI adjustment process on the per-unit value of the first axis voltage measurement component u_{q1,pu} to obtain an adjusted first axis voltage measurement component. Further, the virtual synchronous control device may multiply the per-unit value of the rated angular frequency ω_{n, pu} by the nominal value of the rated angular frequency of the grid ωₙ and add the multiplication result to the adjusted first axis voltage measurement component. Further, the virtual synchronous control device may perform a second integration process on the sum to obtain the output voltage phase angle on the alternating-current side of the voltage source converter.

Step S1303: Perform a second closed-loop process on the second axis voltage measurement component to obtain a second internal potential amplitude of the voltage source converter, where the second internal potential amplitude is identical to a voltage amplitude at the grid connection point.

In this step, the virtual synchronous control device may perform a second closed-loop process on the second axis voltage measurement component to obtain the second internal potential amplitude of the voltage source converter, so that the second internal potential amplitude is identical to the voltage amplitude at the grid connection point. The second closed-loop process may include, but is not limited to, a closed-loop control method based on a PI adjustment process and a second internal potential control integration coefficient.

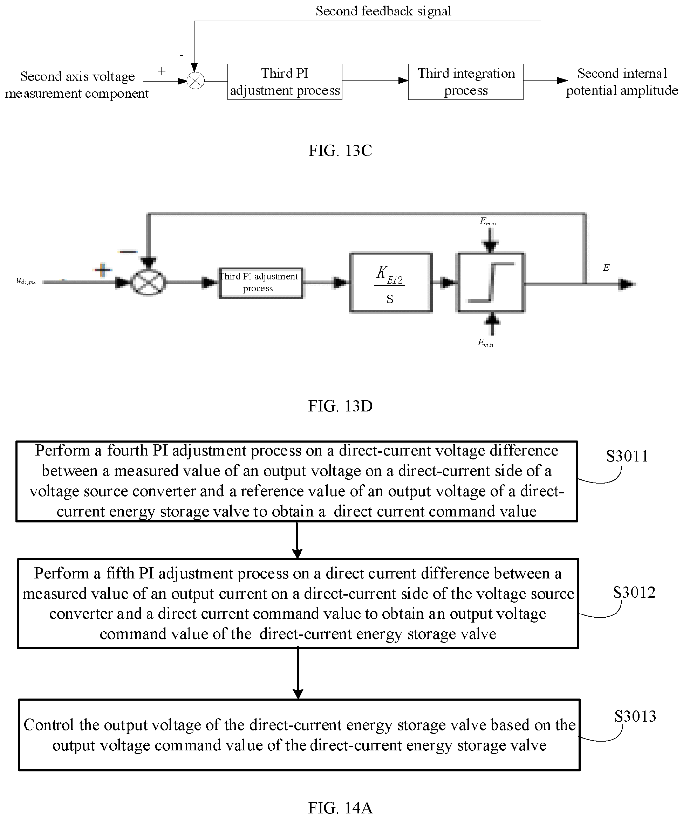

For example, FIG. 13C is a schematic flowchart of a second closed-loop process method according to some embodiments of this application. As shown in FIG. 13C, the virtual synchronous control device may determine a second feedback signal based on a historical internal potential amplitude and sequentially perform a third PI adjustment process and a third integration process on a difference signal between the second axis voltage measurement component and the second feedback signal, to obtain the second internal potential amplitude. The historical internal potential amplitude may include, but is not limited to, a result obtained by the virtual synchronous control device by performing the previous second closed-loop process on the historical second axis voltage measurement component (or the second axis voltage measurement component at the previous moment).

In these embodiments of this application, the virtual synchronous control device may use the historical internal potential amplitude as the second feedback signal and subtract the second feedback signal from the second axis voltage measurement component to obtain a difference signal. Further, the virtual synchronous control device may sequentially perform a third PI adjustment process and a third integration process on the difference signal to obtain the second internal potential amplitude.

Further, to ensure that the second internal potential amplitude can better conform to the actual capability of the energy storage system, in these embodiments of this application, the virtual synchronous control device may sequentially perform a third PI adjustment process and a third integration process on the difference signal between the second axis voltage measurement component and the second feedback signal to obtain a second initial internal potential amplitude and perform an amplitude limiting process on the second initial internal potential amplitude based on a maximum internal potential amplitude and a minimum internal potential amplitude to obtain the second internal potential amplitude.

For example, FIG. 13D is a schematic flowchart of a second closed-loop process method according to some embodiments of this application. As shown in FIG. 13D, the virtual synchronous control device may use the historical internal potential amplitude as the second feedback signal and subtract the second feedback signal from the per-unit value of the second axis voltage measurement component u_{d1,pu} to obtain a difference signal. Further, the virtual synchronous control device may sequentially perform a third PI adjustment process on the difference signal and perform a third integration process based on a second internal potential control integration coefficient K_{Ei2} to obtain a second initial internal potential amplitude. Further, the virtual synchronous control device may perform an amplitude limiting process on the second initial internal potential amplitude based on the maximum internal potential amplitude and the minimum internal potential amplitude to obtain a second internal potential amplitude E.

It can be seen that in these embodiments of this application, by performing an amplitude limiting process on the second initial internal potential amplitude based on the maximum internal potential amplitude and the minimum internal potential amplitude, a more accurate second internal potential amplitude can be obtained, so that the second internal potential amplitude can be made identical to the voltage amplitude at the grid connection point based on the second internal potential amplitude, thereby helping to improve the pre-synchronization processing effect.

In conclusion, in these embodiments of this application, a second PI adjustment process is performed on the first axis voltage measurement component to obtain an adjusted first axis voltage measurement component, and a second integration process is performed on the adjusted first axis voltage measurement component and the rated angular frequency of the grid to obtain an output voltage phase angle on the alternating-current side of the voltage source converter, where the output voltage phase angle is identical to the voltage phase angle at the grid connection point. Further, a second closed-loop process is performed on the second axis voltage measurement component to obtain a second internal potential amplitude of the voltage source converter, where the second internal potential amplitude is identical to the voltage amplitude at the grid connection point. It can be seen that in these embodiments of this application, by performing a PI adjustment process and an integration process on the first axis voltage measurement component and performing a second closed-loop process on the second axis voltage measurement component, the internal potential amplitude and output voltage phase angle of the voltage source converter which are synchronous to the voltage at the grid connection point can be generated, to minimize current impact at the grid connection moment, thereby facilitating smooth switching.

In some embodiments, FIG. 14A is a schematic flowchart of a virtual synchronous control method for an energy storage system according to some other embodiments of this application. Based on the above embodiments, the related content of "Control an output voltage of the direct-current energy storage valve based on a measured value of an output electrical signal on a direct-current side of the voltage source converter and a reference value of the output voltage of the direct-current energy storage valve" in the above step S301 is described in these embodiments of this application. For example, the measured value of the output electrical signal in these embodiments of this application may include, but is not limited to, a measured value of an output voltage on the direct-current side of the voltage source converter and a measured value of an output current on the direct-current side of the voltage source converter. As shown in FIG. 14A, the above step S301 may include the following steps.

Step S3011. Perform a fourth PI adjustment process on a direct-current voltage difference between the measured value of the output voltage on the direct-current side of the voltage source converter and the reference value of the output voltage of the direct-current energy storage valve to obtain a direct current command value.

In this step, the virtual synchronous control device may subtract the reference value of the output voltage of the direct-current energy storage valve from the measured value of the output voltage on the direct-current side of the voltage source converter to obtain the direct-current voltage difference and perform a fourth PI adjustment process on the direct-current voltage difference through a PI regulator to obtain a direct current command value, thereby implementing an outer direct-current voltage loop process.

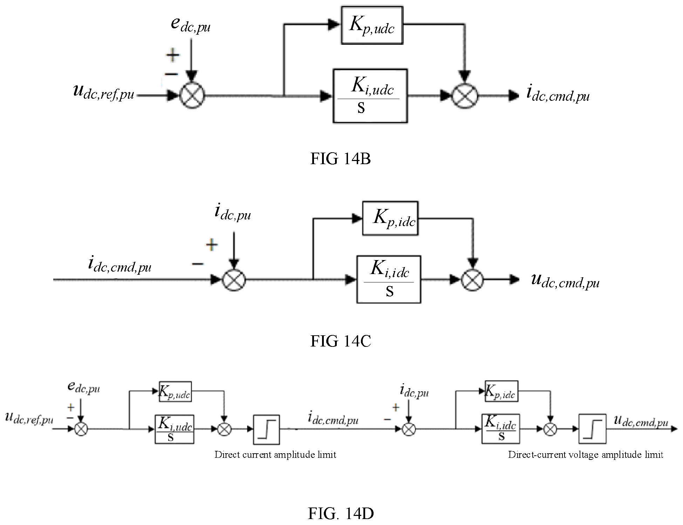

For example, FIG. 14B is a schematic flowchart of a fourth PI adjustment process method according to some embodiments of this application. As shown in FIG. 14B, the virtual synchronous control device may subtract the per-unit value of the reference value of the output voltage of the direct-current energy storage valve u_{dc,ref,pu} from the per-unit value of the measured value of the output voltage on the direct-current side of the voltage source converter e_{dc,pu} to obtain a direct-current voltage difference. Further, the virtual synchronous control device may use K_{p,udc} as a direct-current voltage control proportional coefficient and use K_{i,udc} as a direct-current voltage control integration coefficient to perform a fourth PI adjustment process on the direct-current voltage difference to obtain the per-unit value of the direct current command value i_{dc,cmd,pu}.

To ensure that the output voltage of the direct-current energy storage valve can better conform to the actual capability of the energy storage system, the virtual synchronous control device may perform a fourth PI adjustment process on the direct-current voltage difference between the measured value of the output voltage on the direct-current side of the voltage source converter and the reference value of the output voltage of the direct-current energy storage valve to obtain an initial direct current reference value and perform an amplitude limiting process on the initial direct current reference value based on a maximum direct current amplitude and a minimum direct current amplitude to obtain the direct current command value. The maximum direct current amplitude refers to a maximum output voltage amplitude of the direct-current energy storage valve, and the minimum direct current amplitude refers to a minimum output voltage amplitude of the direct-current energy storage valve.

For example, if the initial direct current command value is greater than the maximum direct current amplitude, the virtual synchronous control device may use the maximum direct current amplitude as the direct current command value.

For another example, if the initial direct current command value is less than or equal to the maximum direct current amplitude and greater than or equal to the minimum direct current amplitude, the virtual synchronous control device may use the initial direct current command value as the direct current command value.

For another example, if the initial direct current command value is less than the minimum direct current amplitude, the virtual synchronous control device may use the minimum direct current amplitude as the direct current command value.

It can be seen that, in these embodiments of this application, by performing an amplitude limiting process on the initial direct current command value based on the maximum direct current amplitude and the minimum direct current amplitude, a more accurate direct current command value can be obtained, facilitating the acquisition of a more accurate output voltage command value of the direct-current energy storage valve based on the direct current command value, thereby enabling more accurate control of the output voltage of the direct-current energy storage valve.

Step S3012. Perform a fifth PI adjustment process on a direct current difference between the measured value of the output current on the direct-current side of the voltage source converter and the direct current command value to obtain an output voltage command value of the direct-current energy storage valve.

In this step, the virtual synchronous control device may subtract the direct current command value from the measured value of the output current on the direct-current side of the voltage source converter to obtain a direct current difference and perform a fifth PI adjustment process on the direct current difference through a PI regulator to obtain the output voltage command value of the direct-current energy storage valve, thereby implementing an inner direct current loop processing.

For example, FIG. 14C is a schematic flowchart of a fifth PI adjustment process method according to some embodiments of this application. As shown in FIG. 14C, the virtual synchronous control device may subtract the per-unit value of the direct current command value i_{dc,cmd,pu} from the per-unit value of the measured value of output current on the direct-current side of the voltage source converter i_{dc,pu} to obtain a direct current difference. Further, the virtual synchronous control device may use K_{p,idc} as a direct current control proportional coefficient and use K_{i,idc} as a direct current control integration coefficient to perform a fifth PI adjustment process on the direct current difference to obtain the per-unit value of the output voltage command value of the direct-current energy storage valve u_{dc,cmd,pu}.

To ensure that the output voltage of the direct-current energy storage valve can better conform to the actual capability of the energy storage system, the virtual synchronous control device may perform a fifth PI adjustment process on the direct current difference between the measured value of the output current on the direct-current side of the voltage source converter and the direct current command value to obtain an initial output voltage command value and perform an amplitude limiting process on the initial output voltage command value based on a maximum direct-current voltage amplitude and a minimum direct-current voltage amplitude to obtain the output voltage command value. The maximum direct-current voltage amplitude refers to a maximum output voltage amplitude of the direct-current energy storage valve, and the minimum direct-current voltage amplitude refers to a minimum output voltage amplitude of the direct-current energy storage valve.

For example, if the initial output voltage command value is greater than the maximum direct-current voltage amplitude, the virtual synchronous control device may use the maximum direct-current voltage amplitude as the output voltage command value.

For another example, if the initial output voltage command value is less than or equal to the maximum direct-current voltage amplitude and greater than or equal to the minimum direct-current voltage amplitude, the virtual synchronous control device may use the initial output voltage command value as the output voltage command value.

For another example, if the initial output voltage command value is less than the minimum direct-current voltage amplitude, the virtual synchronous control device may use the minimum direct-current voltage amplitude as the output voltage command value.

It can be seen that in these embodiments of this application, by performing an amplitude limiting process on the initial output voltage command value based on the maximum direct-current voltage amplitude and the minimum direct-current voltage amplitude, a more accurate output voltage command value can be obtained, facilitating more accurate control of the output voltage of the direct-current energy storage valve based on the output voltage command value.

For ease of understanding, an overall process of a control method for an output voltage of the direct-current energy storage valve is described in the following embodiments of this application. FIG. 14D is a schematic flowchart of a control method for an output voltage of a direct-current energy storage valve according to some embodiments of this application. As shown in FIG. 14D, the virtual synchronous control device may subtract the per-unit value of the reference value of the output voltage of the direct-current energy storage valve u_{dc,ref,pu} from the per-unit value of the measured value of the output voltage on the direct-current side of the voltage source converter e_{dc,pu} to obtain a direct-current voltage difference. Further, the virtual synchronous control device may use K_{p,udc} as a direct-current voltage control proportional coefficient and use K_{i,udc} as a direct-current voltage control integration coefficient to perform a fourth PI adjustment process on the direct-current voltage difference to obtain an initial direct current reference value and perform a direct current amplitude limiting process on the initial direct current reference value based on the maximum direct current amplitude and the minimum direct current amplitude to obtain the per-unit value of the direct current command value i_{dc,cmd,pu}.

Further, the virtual synchronous control device may subtract the per-unit value of the direct current command value i_{dc,cmd,pu} from the per-unit value of the measured value of the output current on the direct-current side of the voltage source converter i_{dc,pu} to obtain a direct current difference. Further, the virtual synchronous control device may use K_{p,idc} as a direct current control proportional coefficient and use K_{i,idc} as a direct current control integration coefficient to perform a fifth PI adjustment process on the direct current difference to obtain an initial output voltage command value and perform a direct-current voltage amplitude limiting process on the initial output voltage command value based on the maximum direct-current voltage amplitude and the minimum direct-current voltage amplitude to obtain the per-unit value of the output voltage command value u_{dc,cmd,pu}.

Step S3013. Control the output voltage of the direct-current energy storage valve based on the output voltage command value of the direct-current energy storage valve.

In this step, the virtual synchronous control device may generate a second control signal based on the output voltage command value of the direct-current energy storage valve, where the second control signal is used for controlling the output voltage of the direct-current energy storage valve, thereby achieve independent control of the output voltage of the direct-current energy storage valve.

In conclusion, in these embodiments of this application, a fourth PI adjustment process is performed on a direct-current voltage difference between the measured value of the output voltage on the direct-current side of the voltage source converter and the reference value of the output voltage of the direct-current energy storage valve to obtain a direct current command value. Further, a fifth PI adjustment process is performed on the direct current difference between the measured value of the output current on the direct-current side of the voltage source converter and the direct current command value to obtain an output voltage command value of the direct-current energy storage valve, and the output voltage of the direct-current energy storage valve is controlled based on the output voltage command value of the direct-current energy storage valve. It can be seen that in these embodiments of this application, the output voltage of the direct-current energy storage valve is independently controlled based on the measured value of the output voltage on the direct-current side of the voltage source converter, the measured value of the output current on the direct-current side of the voltage source converter, and the reference value of the output voltage of the direct-current energy storage valve, so that the voltage source converter does not need to handle both direct-current side control and alternating-current side control, which reduces the complexity of a control loop of the voltage source converter and helps to improve the dynamic control performance of the output voltage of the direct-current energy storage valve, enabling grid-forming control of the energy storage system, thereby providing effective inertia support and voltage support for the grid.

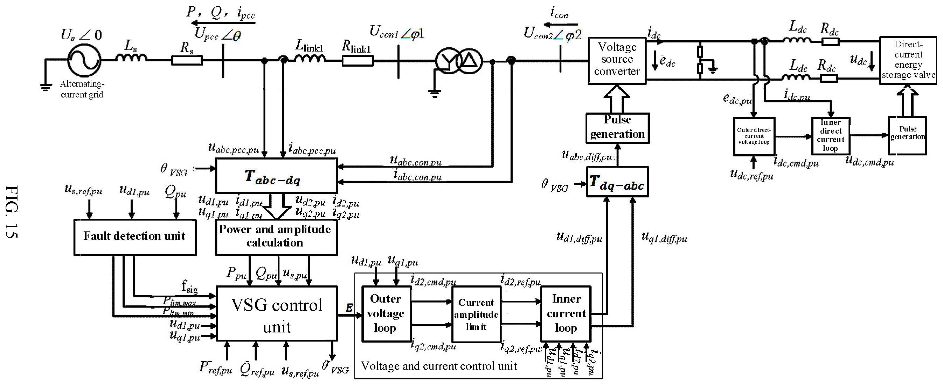

In some embodiments, FIG. 15 is a schematic framework diagram of virtual synchronous control for an energy storage system according to some other embodiments of this application. Based on the above embodiments, an overall block diagram of the virtual synchronous control for the energy storage system is exemplarily described in these embodiments of this application.

As shown in FIG. 15: (1) A control chain of the direct-current energy storage valve may include, but is not limited to, a direct-current voltage and current sampling unit, an outer direct-current voltage loop control unit, an inner direct current loop control unit, and a pulse generation unit. The outer direct-current voltage loop control unit and the inner direct current loop control unit are core control units, and their specific implementations may refer to the related content in the above method embodiments. Details are not repeated herein.

(2) A control chain of the voltage source converter may include, but is not limited to, an alternating-current voltage and current sampling unit, an alternating-current voltage and current coordinate transformation unit, a grid connection point power and voltage amplitude calculation unit (or simply referred to as a power and amplitude calculation unit), a fault detection unit, a VSG active and reactive power decoupling control unit (or simply referred to as a VSG control unit), an outer voltage loop control unit, a current amplitude limiting unit, an inner current loop control unit, and a pulse generation unit. The fault detection unit, the VSG active and reactive power decoupling control unit, the outer voltage loop control unit, and the inner current loop control unit are core control units, and their specific implementations may refer to the related content in the above method embodiments. Details are not repeated herein.

It should be understood that the alternating-current voltage and current coordinate transformation unit may include, but is not limited to, a T_{abc-dq} transformation unit (or referred to as a Park transformation unit) and a T_{dq-abc} transformation unit.

Some parameters in FIG. 15 may refer to Table 2.

**Table 2 is a schematic table of some parameters in FIG. 15.**

| | |
|---|---|
| *u_{abc,pcc,pu}* | Per-unit value of measured value of voltage at grid connection point |
| | Per-unit value of measured value of current at grid connection point |
| *i_{abc,pcc,pu}* | |
| *u_{abc,con,pu}* | Per-unit value of measured value of output voltage on VSC alternating-current valve side of voltage source converter |
| *i_{abc,con,pu}* | Per-unit value of measured value of output current on VSC alternating-current valve side of voltage source converter |
| *u_{d1,pu}* | Per-unit value of measured value of d-axis component of output voltage on VSC alternating-current grid side in dq coordinate system |
| *i_{d1,pu}* | Per-unit value of measured value of d-axis component of output current on VSC alternating-current grid side in dq coordinate system |
| *u_{q1,pu}* | Per-unit value of measured value of q-axis component of output voltage on VSC alternating-current grid side in dq coordinate system |
| *i_{q1,pu}* | Per-unit value of measured value of q-axis component of output current on VSC alternating-current grid side in dq coordinate system |
| *u_{d2,pu}* | Per-unit value of measured value of d-axis component of output voltage on VSC alternating-current valve side in dq coordinate system |
| *i_{d2,pu}* | Per-unit value of measured value of d-axis component of output current on VSC alternating-current valve side in dq coordinate system |
| *u_{q2,pu}* | Per-unit value of measured value of q-axis component of output voltage on VSC alternating-current valve side in dq coordinate system |
| *i_{q2,pu}* | Per-unit value of measured value of q-axis component of output current on VSC alternating-current valve side in dq coordinate system |
| *i_{d2,cmd,pu}* | Per-unit value of command value of d-axis component of output current on VSC alternating-current valve side in dq coordinate system |
| *i_{q2,cmd,pu}* | Per-unit value of command value of q-axis component of output current on VSC alternating-current valve side in dq coordinate system |
| *i_{d2,ref,pu}* | Per-unit value of reference value of d-axis component of output current on VSC alternating-current valve side in dq coordinate system |
| *i_{q2,ref,pu}* | Per-unit value of reference value of q-axis component of output current on VSC alternating-current valve side in dq coordinate system |
| *u_{d1,diff,pu}* | Per-unit value of d-axis component of output voltage on VSC alternating-current grid side in dq coordinate system |
| *u_{q1,diff,pu}* | Per-unit value of q-axis component of output voltage on VSC alternating-current grid side in dq coordinate system |
| *u_{abc,diff,pu}* | Per-unit value of output voltage on VSC alternating-current grid side in abc coordinate system |

It should be noted that when a voltage source converter 101 is directly connected to an alternating-current grid 104 without using a transformer 105, for the alternating-current side of the voltage source converter in these embodiments of this application, there is no need to distinguish whether it is the alternating-current grid side of the voltage source converter or the alternating-current valve side of the voltage source converter, or the alternating-current grid side of the voltage source converter is the same as the alternating-current valve side of the voltage source converter.

In conclusion, in these embodiments of this application, the high-voltage direct-current directly-connected energy storage system is divided into two parts, which are a voltage source converter and a direct-current energy storage valve, for independent control. By adopting a direct-current voltage-direct current dual closed-loop control for the direct-current energy storage valve, the voltage on the direct-current side of the voltage source converter is kept constant to support the voltage source converter in operating in a virtual synchronous control mode. Additionally, by adopting virtual synchronous control with active power and reactive power decoupling for the voltage source converter, transient support for the frequency at the grid connection point and the voltage at the grid connection point is achieved. Furthermore, through coordinated cooperation of a damping parameter and a power amplitude limit, the issue of significant power angle fluctuation and continuous periodic fluctuation in voltage at the grid connection point after fault recovery can be addressed, helping to improve the transient stability of the system during a fault and during fault recovery, thereby enabling reliable low-voltage fault ride-through of the energy storage system.

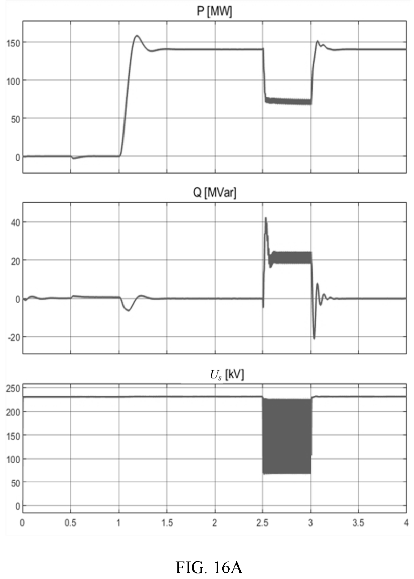

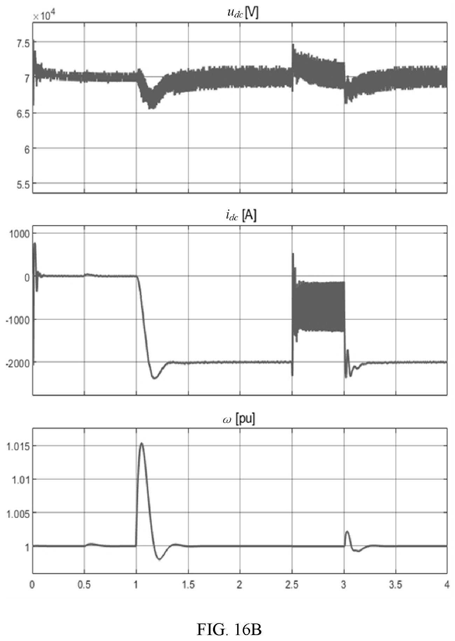

FIG. 16A is a schematic diagram of simulation results of an active power P at a grid connection point, a reactive power Q at the grid connection point, and an alternating-current grid voltage amplitude Uₛ according to some embodiments of this application. FIG. 16B is a schematic diagram of simulation results of an output voltage u_{dc} of a direct-current energy storage valve, an output current i_{dc} on a direct-current side of a voltage source converter, and an output frequency ω on an alternating-current side of the voltage source converter according to some embodiments of this application. As shown in the simulation results for a single-phase fault on the grid side in FIG. 16A and FIG. 16B, it can be seen that: the energy storage system experiences a full-power step in active power at a moment after 1s; a fault occurs in the energy storage system at a moment after 2.5s; and the fault of the energy storage system is cleared at a moment after 3s. Through time-domain simulation verification, the virtual synchronous control method for the energy storage system provided by these embodiments of this application has the capability to provide inertia support and grid voltage support and can meet the requirements on grid connection standards for the low-voltage fault ride-through capability of the energy storage system.

It should be understood that although the steps of the flowcharts involved in the foregoing embodiments are shown sequentially as indicated by the arrows, these steps are not necessarily performed sequentially in the order indicated by the arrows. Unless otherwise specified explicitly, execution of these steps is not limited to a strict order, and the steps may be executed in another order. Moreover, at least some of the steps of the flowcharts involved in the foregoing embodiments may include a plurality of steps or a plurality of stages. These steps or stages are not necessarily performed at a same moment but may be performed at different moments, and these steps or stages are not necessarily performed in a sequential order either but may be performed in a sequential or alternating manner with other steps or at least some of other steps or stages in other steps.

Based on the same inventive concept, an embodiment of this application further provides a virtual synchronous control apparatus for implementing the virtual synchronous control method for the energy storage system described above. The implementation solution provided by the apparatus to solve the problem is similar to the implementation solution described in the above method, so the specific limitations in one or more embodiments of the virtual synchronous control apparatus for the energy storage system provided below can refer to the limitations of the virtual synchronous control method for the energy storage system described above. Details are not repeated herein.

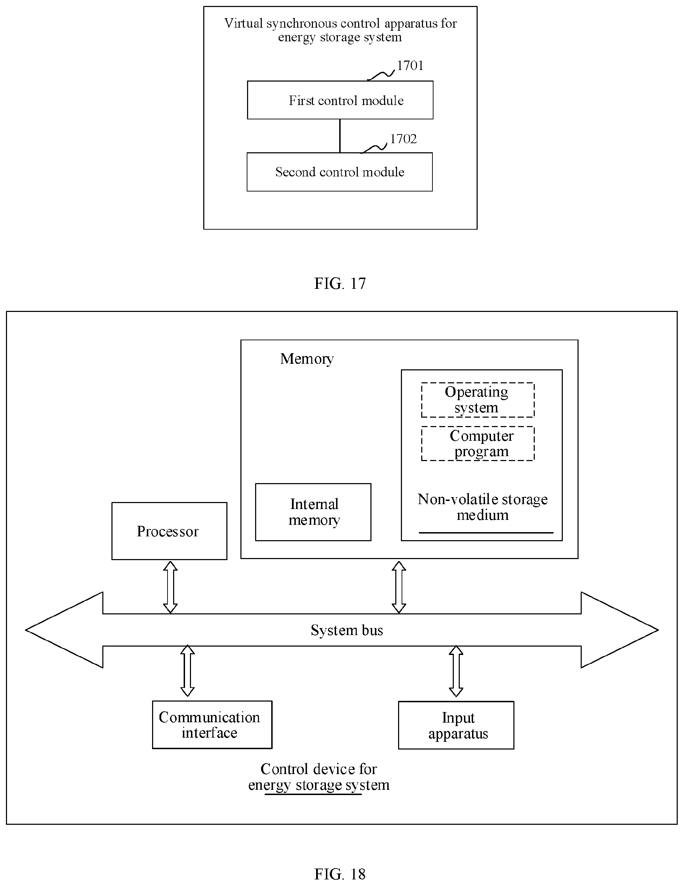

In some embodiments, FIG. 17 is a schematic structural diagram of a virtual synchronous control apparatus for an energy storage system according to some embodiments of this application. The virtual synchronous control apparatus for the energy storage system according to these embodiments of this application can be applied to a control device for the energy storage system. As shown in FIG. 17, the virtual synchronous control apparatus for the energy storage system of these embodiments of this application may include: a first control module 1701 and a second control module 1702.

The first control module 1701 is configured to control an output voltage of a direct-current energy storage valve based on a measured value of an output electrical signal on a direct-current side of a voltage source converter and a reference value of the output voltage of the direct-current energy storage valve.

The second control module 1702 is configured to control an output signal on an alternating-current side of the voltage source converter based on a measured value of a grid connection point electrical signal and a reference value of the grid connection point electrical signal of the voltage source converter.

In some embodiments, the measured value of the grid connection point electrical signal includes: a measured value of active power at the grid connection point, a measured value of reactive power at the grid connection point, and a measured value of voltage at the grid connection point. The reference value of the grid connection point electrical signal includes: a reference value of active power at the grid connection point, a reference value of reactive power at the grid connection point, and a reference value of voltage at the grid connection point. The second control module 1702 includes:
a first control unit, configured to control an output frequency on the alternating-current side of the voltage source converter based on the measured value of active power at the grid connection point and the reference value of active power at the grid connection point; and
a second control unit, configured to control an output voltage amplitude on the alternating-current side of the voltage source converter based on the measured value of reactive power at the grid connection point, the measured value of voltage at the grid connection point, the reference value of reactive power at the grid connection point, and the reference value of voltage at the grid connection point.

In some embodiments, the first control unit includes:
a first determining subunit, configured to determine an active power deviation at the grid connection point based on the measured value of active power at the grid connection point and the reference value of active power at the grid connection point;
a closed-loop control subunit, configured to perform a first closed-loop control process on the active power deviation at the grid connection point to obtain a closed-loop result; and
a first control subunit, configured to control an output frequency based on the closed-loop result and a rated angular frequency of a grid.

In some embodiments, the first determining subunit is specifically configured to:
perform an amplitude limiting process on the reference value of active power at the grid connection point based on a maximum active power amplitude limit and a minimum active power amplitude limit to obtain an amplitude-limited reference value of active power at the grid connection point; and
subtract the measured value of active power at the grid connection point from the amplitude-limited reference value of active power at the grid connection point to obtain the active power deviation at the grid connection point.

In some embodiments, the closed-loop control subunit is specifically configured to:
determine a first feedback signal based on a historical closed-loop result and a damping coefficient; and
perform a first integration process on a difference signal between the active power deviation at the grid connection point and the first feedback signal to obtain the closed-loop result.

In some embodiments, the closed-loop control subunit is specifically configured to:
perform the first integration process on the difference signal based on an inertia time constant and a latch coefficient to obtain the closed-loop result.

In some embodiments, the virtual synchronous control apparatus for the energy storage system further includes:
a first adjusting module, configured to adjust the maximum active power amplitude limit and the minimum active power amplitude limit based on a grid connection point fault detection signal.

In some embodiments, the first adjusting module is specifically configured to:
upon detecting that the grid connection point fault detection signal is used for indicating that there is a fault in the energy storage system, adjust the maximum active power amplitude limit to a target maximum power amplitude limit and adjust the minimum active power amplitude limit to a target minimum power amplitude limit; or
upon detecting that the grid connection point fault detection signal is used for indicating that the fault is cleared within a first preset duration, adjust the maximum active power amplitude limit from the target maximum power amplitude limit to a preset maximum power amplitude limit and adjust the minimum active power amplitude limit from the target minimum power amplitude limit to a preset minimum power amplitude limit.

In some embodiments, the virtual synchronous control apparatus for the energy storage system further includes:
a second adjusting module, configured to adjust the damping coefficient and the latch coefficient based on a grid connection point fault detection signal.

In some embodiments, the second adjusting module is specifically configured to:
upon detecting that the grid connection point fault detection signal is used for indicating that there is a fault in the energy storage system, adjust the damping coefficient to a target damping coefficient and adjust the latch coefficient to a target latch coefficient; or
upon detecting that the grid connection point fault detection signal is used for indicating that the fault is cleared within a second preset duration, adjust the damping coefficient from the target damping coefficient to a preset damping coefficient and adjust the latch coefficient from the target latch coefficient to a preset latch coefficient.

In some embodiments, the virtual synchronous control apparatus for the energy storage system further includes:
a first determining module, configured to determine the grid connection point fault detection signal based on the measured value of voltage at the grid connection point, a preset fault detection threshold, and a preset fault clearance threshold.

In some embodiments, the first determining module is specifically configured to:
upon detecting that a change value of the measured value of voltage at the grid connection point is less than 0 and the measured value of voltage at the grid connection point is less than or equal to the preset fault detection threshold within a third preset duration, determine that the grid connection point fault detection signal is used for indicating that there is a fault in the energy storage system and record a drop amplitude of the measured value of voltage at the grid connection point during the fault; and
upon detecting that a change value of the measured value of voltage at the grid connection point is greater than 0 and the measured value of voltage at the grid connection point is greater than or equal to the preset fault clearance threshold, determine that the grid connection point fault detection signal is used for indicating that the fault of the energy storage system is cleared within a fourth preset duration, and adjust the drop amplitude of the measured value of voltage at the grid connection point during the fault to a preset drop amplitude.

In some embodiments, the second control unit includes:
a second determining subunit, configured to determine a first internal potential amplitude of the voltage source converter based on the measured value of reactive power at the grid connection point, the measured value of voltage at the grid connection point, the reference value of reactive power at the grid connection point, and the reference value of voltage at the grid connection point; and
a second control subunit, configured to control the output voltage amplitude on the alternating-current side of the voltage source converter based on the first internal potential amplitude of the voltage source converter.

In some embodiments, the second determining subunit is specifically configured to:
determine a reactive power deviation at the grid connection point based on the measured value of reactive power at the grid connection point and the reference value of reactive power at the grid connection point;
determine a voltage deviation at the grid connection point based on the measured value of voltage at the grid connection point and the reference value of voltage at the grid connection point; and
perform a second integration process based on the reactive power deviation at the grid connection point and/or the voltage deviation at the grid connection point to obtain the first internal potential amplitude.

In some embodiments, the second control subunit is specifically configured to:
perform an outer voltage loop control process based on the first internal potential amplitude of the voltage source converter and the measured value of voltage at the grid connection point to obtain a current command value for an inner current loop;
perform an inner current amplitude limiting loop process based on the current command value to obtain an output voltage signal on the alternating-current side of the voltage source converter; and
control the output voltage amplitude on the alternating-current side of the voltage source converter based on the output voltage signal on the alternating-current side of the voltage source converter.

In some embodiments, the second control subunit is specifically configured to:
perform a first PI adjustment process, a dynamic virtual impedance process, or a static virtual impedance process on the first internal potential amplitude of the voltage source converter and the measured value of voltage at the grid connection point to obtain the current command value for the inner current loop.

In some embodiments, the virtual synchronous control apparatus for the energy storage system further includes:
a pre-synchronization module, configured to, upon detecting that the energy storage system is in an initial grid connection stage, perform a pre-synchronization process on the output signal on the alternating-current side of the voltage source converter based on the measured value of voltage at the grid connection point.

In some embodiments, the measured value of voltage at the grid connection point includes a first axis voltage measurement component and a second axis voltage measurement component, and the pre-synchronization module includes:
a first adjusting unit, configured to perform a second PI adjustment process on the first axis voltage measurement component to obtain an adjusted first axis voltage measurement component;
an integration unit, configured to perform a second integration process on the adjusted first axis voltage measurement component and a rated angular frequency of a grid to obtain an output voltage phase angle on the alternating-current side of the voltage source converter, where the output voltage phase angle is identical to a voltage phase angle at the grid connection point; and
a closed-loop unit, configured to perform a second closed-loop process on the second axis voltage measurement component to obtain a second internal potential amplitude of the voltage source converter, where the second internal potential amplitude is identical to a voltage amplitude at the grid connection point.

In some embodiments, the closed-loop unit includes:
a third determining subunit, configured to determine a second feedback signal based on a historical internal potential amplitude; and
a fourth determining subunit, configured to sequentially perform a third PI adjustment process and a third integration process on a difference signal between the second axis voltage measurement component and the second feedback signal to obtain the second internal potential amplitude.

In some embodiments, the measured value of the output electrical signal includes: a measured value of an output voltage on the direct-current side of the voltage source converter and a measured value of an output current on the direct-current side of the voltage source converter. The first control module 1701 includes:
a second adjusting unit, configured to perform a fourth PI adjustment process on a direct-current voltage difference between the measured value of the output voltage on the direct-current side of the voltage source converter and the reference value of the output voltage of the direct-current energy storage valve to obtain a direct current command value;
a third adjusting unit, configured to perform a fifth PI adjustment process on a direct current difference between the measured value of the output current on the direct-current side of the voltage source converter and the direct current command value to obtain an output voltage command value of the direct-current energy storage valve; and
a third control unit, configured to control the output voltage of the direct-current energy storage valve based on the output voltage command value of the direct-current energy storage valve.

The virtual synchronous control apparatus for the energy storage system provided by the embodiments of this application can be used to execute the technical solutions in the embodiments of the virtual synchronous control method for the energy storage system, with similar implementation principles and technical effects. Details are not repeated herein.

All or some of the modules in the foregoing virtual synchronous control apparatus for the energy storage system may be implemented by software, hardware, or a combination thereof. Each of the foregoing modules may be embedded as hardware into or independent of a processor in a control device for the energy storage system, or may be stored as software in a memory in the control device for the energy storage system, so that the processor can call and execute the operations corresponding to the foregoing modules.

In some embodiments, FIG. 18 is a schematic structural diagram of a control device for an energy storage system according to some embodiments of this application. As shown in FIG. 18, the control device for the energy storage system according to these embodiments of this application may include a processor, a memory, a communication interface, and an input apparatus that are connected through a system bus. The processor of the control device is configured to provide computing and control capabilities. The memory of the control device includes a non-volatile storage medium and an internal memory. The non-volatile storage medium stores an operating system and a computer program. The internal memory provides an environment for the operation of the operating system and the computer program in the non-volatile storage medium. The communication interface of the control device is used for wired or wireless communication with external devices, and the wireless communication can be implemented through WIFI, mobile cellular networks, NFC (near field communication), or other technologies. The computer program, when executed by the processor, implements the technical solutions in the embodiments of the virtual synchronous control method for the energy storage system of this application, with similar implementation principles and technical effects. Details are not repeated herein.

For example, the input apparatus of the control device may be a touch layer covering a display screen, or buttons, a trackball, or a touchpad provided on a housing of the control device, or an externally connected keyboard, touchpad, mouse, or the like.

Those skilled in the art can understand that the structure shown in FIG. 18 is only a block diagram of a portion of the structure related to the solution of this application and does not constitute a limitation on the control device to which the solution of this application is applied. The specific control device may include more or fewer components than shown in the figure, combine some components, or have a different arrangement of components.

In some embodiments, a control device for an energy storage system is further provided, including a memory and a processor. The memory stores a computer program. The processor, when executing the computer program, implements the technical solutions in the embodiments of the virtual synchronous control method for the energy storage system of this application, with similar implementation principles and technical effects. Details are not repeated herein.

In some embodiments, a computer-readable storage medium is further provided, having a computer program stored thereon. The computer program, when executed by a processor, implements the technical solutions in the embodiments of the virtual synchronous control method for the energy storage system of this application, with similar implementation principles and technical effects. Details are not repeated herein.

In some embodiments, a computer program product is further provided, including a computer program. The computer program, when executed by a processor, implements the technical solutions in the embodiments of the virtual synchronous control method for the energy storage system of this application, with similar implementation principles and technical effects. Details are not repeated herein.

Persons of ordinary skill in the art can understand that all or some of the processes of the method in the embodiments may be implemented by a computer program instructing related hardware. The computer program may be stored in a non-volatile computer-readable storage medium, and when the computer program is executed, the processes in the method in the embodiments can be included. Any reference to a memory, database, or another medium used and provided in the embodiments of this application may include at least one of non-volatile and volatile memories. The non-volatile memory can include a read-only memory (Read-Only Memory, ROM), a magnetic tape, a floppy disk, a flash memory, an optical memory, a high density embedded nonvolatile memory, a resistive random access memory (ReRAM), a magnetoresistive random access memory (Magnetoresistive Random Access Memory, MRAM), a ferroelectric random access memory (Ferroelectric Random Access Memory, FRAM), a phase change memory (Phase Change Memory, PCM), a graphene memory, and the like. The volatile memory may include a random access memory (Random Access Memory, RAM), an external cache memory, or the like. As an illustration but not a limitation, the RAM can be in various forms, such as a static random access memory (Static Random Access Memory, SRAM) or a dynamic random access memory (Dynamic Random Access Memory, DRAM). The processor used in the embodiments of this application can be a general-purpose processor, a central processing unit, a graphic processing unit, a digital signal processor, programmable logic, quantum computing-based data processing logic, or the like, which is not limited thereto.

In conclusion, it should be noted that the above embodiments are merely used for describing the technical solutions of this application rather than limiting this application. Although this application is described in detail with reference to the foregoing embodiments, persons of ordinary skill in the art should understand that they may still make modifications to the technical solutions described in the foregoing embodiments or make equivalent replacements to some or all technical features thereof without departing from the scope of the technical solutions of the embodiments of this application. They should all be covered in the scope of the claims and specification of this application. In particular, as long as there is no structural conflict, the various technical features mentioned in the embodiments can be combined in any manner. This application is not limited to the specific embodiments disclosed in this specification but includes all technical solutions falling in the scope of the claims.

## Claims

1. A virtual synchronous control method for an energy storage system, wherein the energy storage system comprises a voltage source converter and a direct-current energy storage valve, and the method comprises:
controlling an output voltage of the direct-current energy storage valve based on a measured value of an output electrical signal on a direct-current side of the voltage source converter and a reference value of the output voltage of the direct-current energy storage valve; and
controlling an output signal on an alternating-current side of the voltage source converter based on a measured value of a grid connection point electrical signal and a reference value of the grid connection point electrical signal of the voltage source converter.

2. The method according to claim 1, wherein the measured value of the grid connection point electrical signal comprises: a measured value of active power at a grid connection point, a measured value of reactive power at the grid connection point, and a measured value of voltage at the grid connection point, wherein the reference value of the grid connection point electrical signal comprises: a reference value of active power at the grid connection point, a reference value of reactive power at the grid connection point, and a reference value of voltage at the grid connection point; and the controlling an output signal on an alternating-current side of the voltage source converter based on a measured value of a grid connection point electrical signal and a reference value of the grid connection point electrical signal of the voltage source converter comprises:
controlling an output frequency on the alternating-current side of the voltage source converter based on the measured value of active power at the grid connection point and the reference value of active power at the grid connection point; and
controlling an output voltage amplitude on the alternating-current side of the voltage source converter based on the measured value of reactive power at the grid connection point, the measured value of voltage at the grid connection point, the reference value of reactive power at the grid connection point, and the reference value of voltage at the grid connection point.

3. The method according to claim 2, wherein the controlling an output frequency on the alternating-current side of the voltage source converter based on the measured value of active power at the grid connection point and the reference value of active power at the grid connection point comprises:
determining an active power deviation at the grid connection point based on the measured value of active power at the grid connection point and the reference value of active power at the grid connection point;
performing a first closed-loop control process on the active power deviation at the grid connection point to obtain a closed-loop result; and
controlling the output frequency based on the closed-loop result and a rated angular frequency of a grid.

4. The method according to claim 3, wherein the determining an active power deviation at the grid connection point based on the measured value of active power at the grid connection point and the reference value of active power at the grid connection point comprises:
performing an amplitude limiting process on the reference value of active power at the grid connection point based on a maximum active power amplitude limit and a minimum active power amplitude limit to obtain an amplitude-limited reference value of active power at the grid connection point; and
subtracting the measured value of active power at the grid connection point from the amplitude-limited reference value of active power at the grid connection point to obtain the active power deviation at the grid connection point.

5. The method according to claim 4, wherein the performing a first closed-loop control process on the active power deviation at the grid connection point to obtain a closed-loop result comprises:
determining a first feedback signal based on a historical closed-loop result and a damping coefficient; and
performing a first integration process on a difference signal between the active power deviation at the grid connection point and the first feedback signal to obtain the closed-loop result.

6. The method according to claim 5, wherein the performing a first integration process on a difference signal between the active power deviation at the grid connection point and the first feedback signal to obtain the closed-loop result comprises:
performing the first integration process on the difference signal based on an inertia time constant and a latch coefficient to obtain the closed-loop result.

7. The method according to any one of claims 4 to 6, wherein the method further comprises:
adjusting the maximum active power amplitude limit and the minimum active power amplitude limit based on a grid connection point fault detection signal.

8. The method according to claim 7, wherein the adjusting the maximum active power amplitude limit and the minimum active power amplitude limit based on a grid connection point fault detection signal comprises:
upon detecting that the grid connection point fault detection signal is used for indicating that there is a fault in the energy storage system, adjusting the maximum active power amplitude limit to a target maximum power amplitude limit and adjusting the minimum active power amplitude limit to a target minimum power amplitude limit; or
upon detecting that the grid connection point fault detection signal is used for indicating that the fault is cleared within a first preset duration, adjusting the maximum active power amplitude limit from the target maximum power amplitude limit to a preset maximum power amplitude limit and adjusting the minimum active power amplitude limit from the target minimum power amplitude limit to a preset minimum power amplitude limit.

9. The method according to claim 6, wherein the method further comprises:
adjusting the damping coefficient and the latch coefficient based on a grid connection point fault detection signal.

10. The method according to claim 9, wherein the adjusting the damping coefficient and the latch coefficient based on a grid connection point fault detection signal comprises:
upon detecting that the grid connection point fault detection signal is used for indicating that there is a fault in the energy storage system, adjusting the damping coefficient to a target damping coefficient and adjusting the latch coefficient to a target latch coefficient; or
upon detecting that the grid connection point fault detection signal is used for indicating that the fault is cleared within a second preset duration, adjusting the damping coefficient from the target damping coefficient to a preset damping coefficient and adjusting the latch coefficient from the target latch coefficient to a preset latch coefficient.

11. The method according to any one of claims 7 to 10, wherein the method further comprises:
determining the grid connection point fault detection signal based on the measured value of voltage at the grid connection point, a preset fault detection threshold, and a preset fault clearance threshold.

12. The method according to claim 11, wherein the determining the grid connection point fault detection signal based on the measured value of voltage at the grid connection point, a preset fault detection threshold, and a preset fault clearance threshold comprises:
upon detecting that a change value of the measured value of voltage at the grid connection point is less than 0 and the measured value of voltage at the grid connection point is less than or equal to the preset fault detection threshold within a third preset duration, determining that the grid connection point fault detection signal is used for indicating that there is a fault in the energy storage system and recording a drop amplitude of the measured value of voltage at the grid connection point during the fault; and
upon detecting that a change value of the measured value of voltage at the grid connection point is greater than 0 and the measured value of voltage at the grid connection point is greater than or equal to the preset fault clearance threshold, determining that the grid connection point fault detection signal is used for indicating that the fault of the energy storage system is cleared within a fourth preset duration, and adjusting the drop amplitude of the measured value of voltage at the grid connection point during the fault to a preset drop amplitude.

13. The method according to any one of claims 2 to 12, wherein the controlling an output voltage amplitude on the alternating-current side of the voltage source converter based on the measured value of reactive power at the grid connection point, the measured value of voltage at the grid connection point, the reference value of reactive power at the grid connection point, and the reference value of voltage at the grid connection point comprises:
determining a first internal potential amplitude of the voltage source converter based on the measured value of reactive power at the grid connection point, the measured value of voltage at the grid connection point, the reference value of reactive power at the grid connection point, and the reference value of voltage at the grid connection point; and
controlling the output voltage amplitude on the alternating-current side of the voltage source converter based on the first internal potential amplitude of the voltage source converter.

14. The method according to claim 13, wherein the determining a first internal potential amplitude of the voltage source converter based on the measured value of reactive power at the grid connection point, the measured value of voltage at the grid connection point, the reference value of reactive power at the grid connection point, and the reference value of voltage at the grid connection point comprises:
determining a reactive power deviation at the grid connection point based on the measured value of reactive power at the grid connection point and the reference value of reactive power at the grid connection point;
determining a voltage deviation at the grid connection point based on the measured value of voltage at the grid connection point and the reference value of voltage at the grid connection point; and
performing a second integration process based on the reactive power deviation at the grid connection point and/or the voltage deviation at the grid connection point to obtain the first internal potential amplitude.

15. The method according to claim 13 or 14, wherein the controlling the output voltage amplitude on the alternating-current side of the voltage source converter based on the first internal potential amplitude of the voltage source converter comprises:
performing an outer voltage loop control process based on the first internal potential amplitude of the voltage source converter and the measured value of voltage at the grid connection point to obtain a current command value for an inner current loop;
performing an inner current amplitude limiting loop process based on the current command value to obtain an output voltage signal on the alternating-current side of the voltage source converter; and
controlling the output voltage amplitude on the alternating-current side of the voltage source converter based on the output voltage signal on the alternating-current side of the voltage source converter.

16. The method according to claim 15, wherein the performing an outer voltage loop control process based on the first internal potential amplitude of the voltage source converter and the measured value of voltage at the grid connection point to obtain a current command value for an inner current loop comprises:
performing a first PI adjustment process, a dynamic virtual impedance process, or a static virtual impedance process on the first internal potential amplitude of the voltage source converter and the measured value of voltage at the grid connection point to obtain the current command value for the inner current loop.

17. The method according to any one of claims 2 to 16, wherein the method further comprises:
upon detecting that the energy storage system is in an initial grid connection stage, performing a pre-synchronization process on the output signal on the alternating-current side of the voltage source converter based on the measured value of voltage at the grid connection point.

18. The method according to claim 17, wherein the measured value of voltage at the grid connection point comprises a first axis voltage measurement component and a second axis voltage measurement component, and the performing a pre-synchronization process on the output signal on the alternating-current side of the voltage source converter based on the measured value of voltage at the grid connection point comprises:
performing a second PI adjustment process on the first axis voltage measurement component to obtain an adjusted first axis voltage measurement component;
performing a second integration process on the adjusted first axis voltage measurement component and a rated angular frequency of a grid to obtain an output voltage phase angle on the alternating-current side of the voltage source converter, wherein the output voltage phase angle is identical to a voltage phase angle at the grid connection point; and
performing a second closed-loop process on the second axis voltage measurement component to obtain a second internal potential amplitude of the voltage source converter, wherein the second internal potential amplitude is identical to a voltage amplitude at the grid connection point.

19. The method according to claim 18, wherein the performing a second closed-loop process on the second axis voltage measurement component to obtain a second internal potential amplitude of the voltage source converter comprises:
determining a second feedback signal based on a historical internal potential amplitude; and
sequentially performing a third PI adjustment process and a third integration process on a difference signal between the second axis voltage measurement component and the second feedback signal to obtain the second internal potential amplitude.

20. The method according to any one of claims 1 to 19, wherein the measured value of the output electrical signal comprises: a measured value of an output voltage on the direct-current side of the voltage source converter and a measured value of an output current on the direct-current side of the voltage source converter; and the controlling an output voltage of the direct-current energy storage valve based on a measured value of an output electrical signal on a direct-current side of the voltage source converter and a reference value of the output voltage of the direct-current energy storage valve comprises:
performing a fourth PI adjustment process on a direct-current voltage difference between the measured value of the output voltage on the direct-current side of the voltage source converter and the reference value of the output voltage of the direct-current energy storage valve to obtain a direct current command value;
performing a fifth PI adjustment process on a direct current difference between the measured value of the output current on the direct-current side of the voltage source converter and the direct current command value to obtain an output voltage command value of the direct-current energy storage valve; and
controlling the output voltage of the direct-current energy storage valve based on the output voltage command value of the direct-current energy storage valve.

21. A virtual synchronous control apparatus for an energy storage system, wherein the energy storage system comprises a voltage source converter and a direct-current energy storage valve, and the apparatus comprises:
a first control module, configured to control an output voltage of the direct-current energy storage valve based on a measured value of an output electrical signal on a direct-current side of the voltage source converter and a reference value of the output voltage of the direct-current energy storage valve; and
a second control module, configured to control an output signal on an alternating-current side of the voltage source converter based on a measured value of a grid connection point electrical signal and a reference value of the grid connection point electrical signal of the voltage source converter.

22. A control device for an energy storage system, comprising a memory and a processor, wherein the memory stores a computer program, and the processor, when executing the computer program, implements the steps of the method according to any one of claims 1 to 20.

23. A computer-readable storage medium, having a computer program stored thereon, wherein the computer program, when executed by a processor, implements the steps of the method according to any one of claims 1 to 20.

24. A computer program product, comprising a computer program, wherein the computer program, when executed by a processor, implements the steps of the method according to any one of claims 1 to 20.
